# NEUE EUROPÄISCHE PATENTSCHRIFT

(11) **EP 2 709 803 B2**
(45) Veröffentlichungstag und Bekanntmachung des Hinweises auf die Entscheidung über den Einspruch: **06.07.2022**
(45) Hinweis auf die Patenterteilung: 21.12.2016
(21) Anmeldenummer: 12740279.0
(22) Anmeldetag: 15.05.2012
(51) Int. Cl.: B29C 45/76, G06F 3/0484, G06F 3/0354, G06F 3/0488, B25J 13/06, B25J 19/06, G05B 19/409

(54) **VERFAHREN ZUR MANUELL GESTEUERTEN BEEINFLUSSUNG VON BEWEGUNGEN EINER MASCHINE ODER ANLAGE SOWIE ENTSPRECHENDE MASCHINENSTEUERUNG**
METHOD FOR INFLUENCING MOVEMENTS OF A MACHINE OR FACILITY IN A MANUALLY CONTROLLED MANNER AND CORRESPONDING MACHINE CONTROL SYSTEM
PROCÉDÉ POUR AGIR PAR COMMANDE MANUELLE SUR LES MOUVEMENTS D'UNE MACHINE OU D'UNE INSTALLATION, ET UNITÉ DE COMMANDE DE MACHINE CORRESPONDANTE

(30) Priorität: 16.05.2011 AT 6952011
(43) Veröffentlichungstag der Anmeldung: 26.03.2014
(73) Patentinhaber: KEBA Industrial Automation GmbH, 4040 Linz (AT)
(72) Erfinder: PETRUZELKA, Michael, A-4048 Puchenau (AT); WINDHAGER, Wolfgang, A-4063 Hörsching (AT)
(74) Vertreter: Burger, Hannes
(86) Internationale Anmeldenummer: PCT/AT2012/050069
(87) Internationale Veröffentlichungsnummer: WO 2012/155167

(56) Entgegenhaltungen:
- EP-A1- 2 124 117
- EP-A1- 2 196 881
- EP-A1- 2 204 909
- EP-B1- 1 920 300
- WO-A1-2005/076117
- WO-A1-2008/071669
- WO-A2-2005/050428
- DE-A1-102004 043 300
- DE-U1- 20 007 972
- JP-A- 11 262 883
- US-A- 6 088 628
- SONICWAVEZOR: "Using iPod Touch to control NASA Robot over wifi", INTERNET CITATION, 24. März 2010 (2010-03-24), Seite 1, XP002653593, Gefunden im Internet: URL:http://www.youtube.com/watch?v=4XQeZE4 nh6M [gefunden am 2011-07-27]
- THEROBOTGEEKNET: "Multi-Touch_Robot_Control_Demo_01.wmv", INTERNET CITATION, 3. Februar 2010 (2010-02-03), Seite 1, XP002653715, Gefunden im Internet: URL:http://www.youtube.com/watch?v=rQxMf1T V_jo [gefunden am 2011-07-27]

## Beschreibung

Die Erfindung betrifft ein Verfahren zur manuell gesteuerten Beeinflussung von Bewegungen einer elektronisch gesteuerten Maschine oder Anlage sowie eine entsprechend ausgebildete Maschinensteuerung zur Umsetzung des erfindungsgemäßen Verfahrens, wie dies in den Ansprüchen 1 und 16 angegeben ist.

Die EP 2 124 117 A1 beschreibt eine gattungsgemäße Maschinensteuerung zur manuell gesteuerten Beeinflussung von Bewegungen einer elektronisch gesteuerten Maschine, insbesondere Werkzeugmaschine. Diese Maschinensteuerung umfasst eine Bedieneinrichtung zur Bedienung der Werkzeugmaschine, wobei die Bedieneinrichtung eine berührungsempfindliche Fläche aufweist. Die Bedieneinrichtung ist dabei derart ausgebildet, dass beim Bewegen eines diese berührungsempfindliche Fläche berührenden Elementes über eine bestimme Länge, von der Bedieneinrichtung, entsprechend der Länge der Bewegung, ein Ausgangssignal zur Steuerung der Bewegung eines Maschinenelementes in Richtung einer Achse der Werkzeugmaschine ausgegeben wird. Durch Ausbildung von solchen berührungsempfindlichen Flächen ist eine Bedieneinrichtung geschaffen worden, die unempfindlich gegenüber die Bedieneinrichtung umgebenden Schmutzpartikeln, Flüssigkeiten und/oder Gasen ist. Die mit einer solchen Bedieneinrichtung erzielbare Bedienungsergonomie bzw. die Bedienungssicherheit in Bezug auf die Bedienungsabläufe ist bei dieser vorbekannten Ausführung jedoch wenig zufriedenstellend.

Die US 6,088,628 A beschreibt ein Bedienpanel einer Robotersteuerung mit einem berührungssensitiven Abschnitt, welcher zur grafischen Visualisierung und Eingabe von Steuerbefehlen vorgesehen ist. Insbesondere ist ein sogenanntes Touch-Panel ausgebildet, auf welchem ein zu steuernder Industrieroboter grafisch angezeigt werden kann und wobei durch Vorgabe von Streich- oder Wischbewegungen am Touch-Panel der Bewegungsablauf des Industrieroboters beeinflusst bzw. die Zielposition des Endeffektors des Industrieroboters wunschgemäß verändert werden kann. Durch Variation der Visualisierungsrichtungen und Darstellungen des zu steuernden Industrieroboters am Touch-Panel kann eine dreidimensionale Veränderung der Zielposition dieses Industrieroboters möglichst intuitiv bewerkstelligt werden. Allfällige, unterschiedliche Betrachtungswinkel zwischen der Darstellung am Display und dem Blickwinkel auf den zu steuernden Roboter beeinträchtigen jedoch die Bedienergonomie bzw. die erzielbare Bedien-Performance. Aber auch die Sicherheit in Bezug auf Personen und Sachwerte ist bei dieser Bedienungssystematik kritisch. Darüber hinaus ist die erzielbare Feinfühligkeit bzw. Dirigierbarkeit nur bedingt zufriedenstellend.

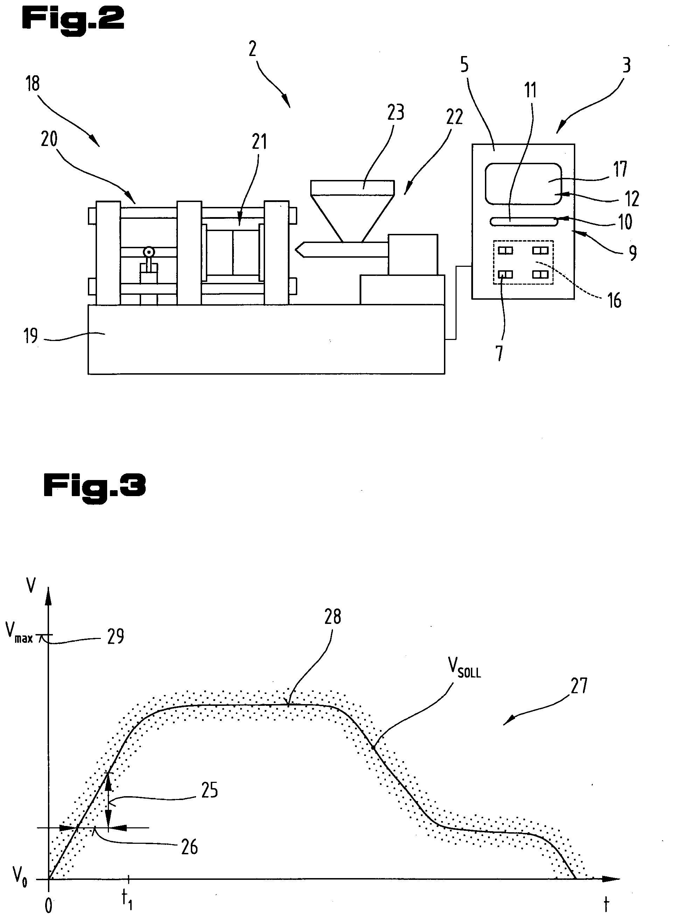

Die JP 11 262883 A beschreibt ein Handbediengerät zum Steuern bzw. sogenannten Teachen von Industrierobotern. Dieses Handbediengerät weist ein Touch-Panel auf, mit welchem Verfahrbewegungen, Zielpositionen, Verfahrgeschwindigkeiten und Bewegungsrichtungen vorgegeben werden können. Die Befehlsvorgabe von Seiten des Bedieners erfolgt dabei mittels Zieh- bzw. Wischbewegungen auf dem berührungssensitiven Touch-Panel, wie dies in Fig. 3 schematisch veranschaulicht wurde. Die erzielbare Bedienungsergonomie und Sicherheit der Steuerabläufe ist auch hier nur bedingt zufriedenstellend.

Die Videoveröffentlichungen "SONICWAVEZOR, Using iPod Touch to control NASA Robot over wifi" und "THEROBOTGEEKNET, Multi-Touch_Robot_Control_Demo_01.wmv" zeigen standardmäßige Touch-Screens, insbesondere Touch-Panels, welche als Bediengeräte zur steuerungstechnischen Beeinflussung eines Modellroboters fungieren. Dabei werden durch Tipp- bzw. Wischbewegungen auf der berührungssensitiven Eingabe- und Anzeigefläche des Touch-Panels Steuerbefehle generiert, welche die Bewegungsabläufe des angesteuerten Modellroboters beeinflussen. Es ist ersichtlich, dass eine vollumfängliche Kontrolle bzw. eine den Vorgaben des Bedieners möglichst exakt entsprechende Bedienung des angesteuerten Modellroboters nur bedingt ausführbar ist, wodurch eine Anwendbarkeit in Verbindung mit industriellen Maschinen bzw. Robotern nur eingeschränkt möglich ist.

Aus dem Bereich der Steuerungstechnik bzw. der steuerungstechnischen Automatisierung von Anlagen, Maschinen oder technischen Prozessen ist es bekannt, elektronische Steuerungseinrichtungen vorzusehen, welche eine sogenannte Mensch-Maschine-Schnittstelle (HMI) ausbilden, um eine Visualisierung von Prozessdaten sowie eine Beeinflussung der Steuerungsabläufe durch die Bedienperson zu ermöglichen. Derartige Steuerungseinrichtungen umfassen hierfür stationäre Bedienpanels und/oder tragbare Vorrichtungen, welche eine derartige Mensch-Maschine-Schnittstelle ausbilden, wie dies beispielsweise in der WO 03/001393 A2, welche auf die Anmelderin zurückgeht, offenbart ist. Bei dieser vorbekannten Ausführung wurde vorgeschlagen, eine kombinierte Ein- und Ausgabevorrichtung in Form eines Touch-Screen zu implementieren, wobei mittels diesem Touch-Screen eine Visualisierung und Überwachung prozessrelevanter Parameter und eine Veränderung von Steuerungsabläufen mittels auf Software basierender Eingabemasken ermöglicht ist. Zur manuell gesteuerten Beeinflussung von Bewegungen einer elektronisch gesteuerten Maschine oder Anlage ist dabei ein Joystick vorgesehen, welcher ein analog steuerndes bzw. quasi-analoges Eingabemittel darstellt und eine proportionale Steuerung, insbesondere eine geschwindigkeitsgeregelte Ansteuerung von Antrieben bzw. Maschinenachsen ermöglicht. Derartige analoge Eingabemittel in Form eines Joysticks haben sich in der Praxis vielfach bewährt, stellen jedoch aufgrund der erforderlichen Zuverlässigkeit und der hohen Ansprüche in industrieller Umgebung, insbesondere hinsichtlich Dichtheit gegenüber Staub, Flüssigkeiten oder Dämpfen, sowie der geforderten mechanischen Robustheit, einen vergleichsweise hohen Kostenfaktor dar. Ein weiterer Nachteil solcher spezieller Eingabemittel, wie eben eines Joysticks oder eines ebenso weit verbreiteten, jedoch nur eindimensional wirkenden Jog-Rades, ist der Platzbedarf für den Einbau, welcher insbesondere bei mobilen bzw. portablen Bediengeräten besonders schwer wiegt. In Betriebsumgebungen mit besonderen Anforderungen an die Sauberkeit und Hygiene stellen die Winkel, Spalte und Erhebungen bei der Verwendung solcher Eingabemittel einen weiteren Nachteil dar. Dabei werden derartige analoge oder inkrementelle Eingabemittel in vielen Fällen nur vergleichsweise selten tatsächlich betätigt, wie etwa beim gelegentlichen manuellen Einrichten von ansonsten vollautomatisch arbeitenden Maschinen.

Aus dem Stand der Technik ist es weiters allgemein bekannt, Maschinenachsen mittels Tastschalter oder ähnlich wirkenden Eingabeelementen, wie etwa Folientasten oder entsprechenden Betätigungsfeldern auf Touch-Screens, zu verfahren, wobei hierbei jedoch in der Regel von der Bedienperson nur die Bewegungsrichtung der Maschinenachse unmittelbar vorgebbar ist, während die Verfahrgeschwindigkeit betätigungsunabhängig festgelegt und die Zielposition der Achsenbewegung nur über die Dauer der Betätigung einstellbar ist. Variable Geschwindigkeitsvorgaben, etwa einmal für eine schnelle, längere Verfahrbewegung und ein weiteres mal für eine kurze, präzise Positionierung, können nicht oder nur mittels zusätzlicher Eingabemittel gemacht werden.

Der vorliegenden Erfindung liegt die Aufgabe zugrunde, ein Verfahren zur manuell gesteuerten Beeinflussung von Bewegungen einer elektronisch gesteuerten Anlage oder Maschine zu schaffen, welches eine möglichst intuitive Bedienung bietet, die Gefahr von fehlerhaften Bedienungen minimiert und zugleich eine möglichst robuste, kompakte und kostengünstige Umsetzung ermöglicht. Eine weitere Aufgabe der Erfindung liegt darin, eine entsprechende Maschinensteuerung anzugeben.

Die entsprechenden Aufgaben der Erfindung werden durch die Maßnahmen gemäß Anspruch 1 und unabhängig davon durch die Maßnahmen gemäß Anspruch 16 gelöst.

Ein Vorteil der erfindungsgemäßen Maßnahmen liegt darin, dass ein berührungssensitiver Positionserfassungssensor, insbesondere in Art eines Touchpads oder Touch-Screens, eingesetzt wird, um eine quasi-analoge Steuerung von Antrieben einer Maschine oder Anlage zu bewerkstelligen. Der entsprechende Positionserfassungssensor ist dabei also nicht bloß als Schalter- oder Tasterelement mit Ein- und Ausschaltfunktion ausgeführt, sondern als quasi analog steuerndes Eingabemittel implementiert. D.h., dass der berührungssensitive Positionserfassungssensor eine proportionale Steuerung von Antrieben bzw. Maschinenachsen ermöglicht. Insbesondere ist eine zur Bedienung bzw. Betätigung des berührungssensitiven Positionserfassungssensors proportionale Ansteuerung entsprechender Antriebe bzw. Maschinenachsen ermöglicht. Insbesondere kann damit in einfacher und zuverlässiger Art und Weise eine gewissermaßen dosierte Ansteuerung von Maschinenachsen, beispielsweise eine geschwindigkeitsproportionale, beschleunigungsvariable und/oder positionsproportionale Steuerung von Antrieben im Verhältnis zur Bedienung bzw. Betätigung des berührungssensitiven Positionserfassungssensors umgesetzt werden. Ein besonderer Vorteil der erfindungsgemäßen Maßnahmen liegt auch darin, dass damit eine besonders robuste bzw. funktionszuverlässige Ausführung geschaffen werden kann, da keine beweglichen Teile erforderlich sind. Insbesondere kann der mechanische Aufbau des stationären oder tragbaren Bedienpanels besonders kompakt und auch relativ einfach bzw. funktionszuverlässig ausgeführt werden. Unter anderem wird also durch die Implementierung eines berührungssensitiven Positionserfassungssensors eine hohe Funktionszuverlässigkeit bzw. Ausfallssicherheit gewährleistet, da die Beschädigungsgefahr desselben, beispielsweise aufgrund relativ rauer industrieller Umgebungsbedingungen oder aufgrund der Tragbarkeit oder Mobilität der Vorrichtung zur Maschinenbedienung, gering ist. Insbesondere ist die Wahrscheinlichkeit bzw. die Gefahr von Beschädigungen oder von sicherheitskritischen Funktionsfehlern des berührungssensitiven Positionserfassungssensors minimal. Ein weiterer Vorteil liegt darin, dass derartige Maschinensteuerungen bzw. Steuerungseinrichtungen besonders kompakt und leichtgewichtig aufgebaut werden können, da das quasi-analoge Eingabemittel einen geringen Platzbedarf aufweist und keine besonderen mechanischen Schutzmaßnahmen erfordert. Darüber hinaus ist die Implementierung von wenigstens einem berührungssensitiven Positionserfassungssensor zur Beeinflussung von Bewegungen oder Antrieben einer elektronisch gesteuerten Maschine oder Anlage relativ kostengünstig implementierbar. Hinzu kommt, dass unter Umständen gewünschte Adaptierungen des Steuerungskonzeptes bzw. des Bedienkonzeptes in einfacher Art und Weise durch softwaretechnische Anpassungen bzw. Überarbeitungen der Steuerungseinrichtung ermöglicht sind. Ein weiterer Effekt der erfindungsgemäßen Maßnahmen liegt darin, dass problemlos auch eine unmittelbare bzw. direkte, d.h. eine synchron gekoppelte Bedienung von Maschinenachsen bzw. Antrieben mittels einem berührungssensitiven Positionserfassungssensor, insbesondere mittels einem Touchpad oder Touch-Screen ermöglicht ist. Dabei wird zufolge der Bedienhandlungen der Bedienperson innerhalb der Auswertungs- bzw. Signalkette der Steuerungseinrichtung eine Folge von Sollwerten für den Antrieb bzw. dessen Umrichter-Schaltung generiert, welche Sollwerte als direkte Eingangsgrößen bzw. Steuerungswerte für den Antrieb bzw. dessen Umrichter, insbesondere für eine Antriebssteuerung fungieren können.

Von besonderem Vorteil ist auch, dass dadurch quasi eine blinde Bedienung bzw. Betätigung des Positionserfassungssensors erleichtert bzw. unterstützt wird. Vor allem dann, wenn der Positionserfassungssensor an einer vertikalen Bedienebene, insbesondere an einem Bedienpanel ausgebildet ist, kann dadurch die Führung des Eingabeorgans, insbesondere des Fingers erleichtert werden, ohne dass ein ständiger Blick auf das Bedienpanel erforderlich ist. Vielmehr kann dadurch der Blick bzw. die Konzentration der Bedienperson auf die manuell zu steuernde Maschinenachse bzw. Verfahrbewegung gerichtet werden. Somit kann durch diese Maßnahmen der Bedienkomfort wesentlich gesteigert werden und zugleich die Gefahr von fehlerhaften Bedienungen minimiert werden bzw. das von abgebrochenen und wieder aufgenommenen Bedienhandlungen ausgehende Gefahrenpotential reduziert werden.

Von Vorteil sind auch die weiterbildenden Maßnahmen nach Anspruch 2, da dadurch ein Zittern bzw. Ruckeln der Maschine bzw. der Maschinenachse und eine ungewollte Verstellbewegung vermieden bzw. hintan gehalten werden kann. Insbesondere sind die Sensor- bzw. Rohdaten des Touch-Eingabemittels üblicherweise mit einem gewissen Rausch- bzw. Störpegel oder Jitter behaftet, welche Signalstörungen sich durch die angegebenen Maßnahmen nicht unmittelbar in den generierten Sollwerten für die Antriebssteuerung niederschlagen. Insbesondere werden dadurch Signalunschärfen bzw. Unschärfen in Bezug auf die Bedienhandlung weitestgehend eliminiert bzw. bestmöglich gedämpft oder gefiltert, wobei die angegebene Glättung vorzugsweise durch mathematische Methoden, wie beispielsweise durch eine Polynom-Approximation, vorgenommen wird. Dadurch wird eine zuverlässige Signalkonditionierung und eine für eine Maschinenbedienungen bzw. Antriebsbeeinflussungen praktikable Sollwertgenerierung gewährleistet.

Von besonderem Nutzen sind auch die Maßnahmen nach einem oder mehreren der Ansprüche 3 bis 5, da dadurch die Auswertungsroutine für die Ermittlung von Detektionsergebnissen bzw. die Abfrageroutine für die Ermittlung von Positionsdaten des berührungssensitiven Positionserfassungssensors in eine Betriebssystemebene eingebettet sein kann, in der zusätzlich verschiedene andere Prozesse, insbesondere in Bezug auf ein grafisches Benutzerinterface ablaufen. Der berührungssensitive Positionserfassungssensor, insbesondere dessen Auswertungsvorrichtung bzw. Auswertungsschaltung kann somit in Betriebssysteme eingebunden sein, welche nicht strengen bzw. zeitlich starren Echtzeitanforderungen genügen müssen bzw. nicht in einem garantierten und starren Zeitraster ablaufen. Es ist dadurch also ermöglicht, dass die Abfrage der aktuellen Touch- bzw. Berührungspositionen am berührungssensitiven Positionserfassungssensor in tolerierbar unregelmäßigen Zeitabständen erfolgt bzw. ist es akzeptierbar, wenn das entsprechende Betriebssystem eine streng periodische Abfrage des berührungssensitiven Positionserfassungssensors nicht garantieren kann.

Entsprechend einer zweckmäßigen Maßnahme ist vorgesehen, die Berührungs- bzw. Betätigungspunkte bzw. dementsprechende Koordinatendaten zusammen mit dem jeweiligen Erfassungszeitpunkt aufzuzeichnen, insbesondere in einem Puffer abzulegen und daraus einen zeitlichen Verlauf zu ermitteln, was beispielsweise durch eine Polynominterpolation oder durch eine Polynomapproximation erfolgen kann. Grundsätzlich können dafür jedoch verschiedenste Filtertechniken bzw. Filtercharakteristiken sowie auch zusätzliche Plausibilisierungsmethoden zum Korrigieren, Eliminieren und Glätten fehler- bzw. störungsbehafteter Erfassungswerte zum Einsatz kommen. Darauf aufbauend werden dann die Sollwerte ermittelt, welche zum starren Zeitraster für die Antriebssteuerung passen. Insbesondere kann durch Interpolation oder auch durch Extrapolation das zeitlich variierende Zeitraster in Bezug auf die Abfrage von Positions- bzw. Berührungsdaten in ein streng periodisches Zeitraster konvertiert werden, nachdem eine Maschinensteuerung typischerweise ein digitales Abtastsystem bzw. ein Betriebssystem aufweist, welches nach einem streng periodischen Zeitraster arbeitet. Insbesondere werden dadurch zeitlich variierende Abtastsysteme für den berührungssensitiven Positionserfassungssensor für ein streng periodisches Zeitraster der Antriebssteuerung von Maschinenachsen bzw. Maschinenantrieben kompatibel bzw. koppelbar. Dadurch wird eine praktikable und in Bezug auf die vorhandenen Hardware- und Software-Ressourcen optimale Kombination eines berührungssensitiven Positionserfassungssensors mit einer Steuerungseinrichtung zur Beeinflussung von Maschinenachsen bzw. Maschinenbewegungen erzielt.

Den Maßnahmen nach Anspruch 6 liegt der Vorteil zugrunde, dass die Abfrage des berührungssensitiven Positionserfassungssensors, vor allem dann wenn er in Form eines Touch-Screens ausgeführt ist, dennoch in einer Betriebssystemebene ablaufen kann, die nicht zuverlässig echtzeitfähig ist und bei der es in besonderen Situationen zu längeren Unterbrechungen in den Abfragen kommen könnte. Um diesem Problem der mangelnden Echtzeitfähigkeit bzw. der fehlenden Ermittlungskontinuität abzuhelfen bzw. um daraus resultierende, möglicherweise kritische Zustände hintan zu halten, wird in vorteilhafter Art und Weise in einer anderen, echtzeitfähigen Betriebssystemebene, in welcher beispielsweise auch die Sollwerte für die Antriebe ermittelt werden können, die Zeitspanne seit der letzten durchgeführten Abfrage des berührungssensitiven Positionserfassungssensors überwacht und beim Ausbleiben der Abfragen bzw. Abfrageergebnisse eine laufende Verfahrbewegung der Maschine bzw. Maschinenachse abgebrochen. Dieser Bewegungsabbruch kann durch die übergeordnete Steuerungseinrichtung und/oder durch die Antriebssteuerung veranlasst bzw. umgesetzt werden. Unter Umständen sicherheitskritische Zustände können somit in zuverlässiger Art und Weise automatisiert ausgeschlossen werden.

Durch die Maßnahmen gemäß Anspruch 7 ist eine Proportionalsteuerung gewährleistet, wie sie auch mit einem elektromechanischen, quasi analog steuernden Joystick ermöglicht ist. Insbesondere wird dadurch eine besonders intuitive und fehlersichere Bedienung bzw. Verstellung von Maschinen bzw. Maschinenachsen erzielt.

Von Vorteil sind auch die Maßnahmen gemäß Anspruch 8, da dadurch eine rasche und einfache Umpositionierung von Maschinenachsen ausgehend von beliebigen Zwischen- oder Ausgangspositionen ermöglicht ist. Darüber hinaus wird dadurch in einfacher Art und Weise eine Änderung der Bewegungsrichtung über lediglich einen berührungssensitiven Positionserfassungssensor ermöglicht. Zudem ist eine derartige Bedienhandlung überaus intuitiv und fehlerfrei ausführbar. Insbesondere sind dadurch die Sollwert-Änderungen proportional zum zurückgelegten Betätigungsweg. Dies ermöglicht eine Relativbewegung der Maschinenachse ausgehend von einem aktuellen Ausgangspunkt um eine bestimmte Distanz, welche mit dem zurückgelegten Betätigungsweg bzw. mit der Länge der Berührungsstrecke beim Überstreichen des berührungssensitiven Positionserfassungssensors korrespondiert. Insbesondere kann dadurch ausgehend von einem beliebig positionierten ersten Aufstands- bzw. Berührungspunkt gegenüber dem Positionserfassungssensor eine korrespondierende Verstellbewegung um einen proportionalen Betrag bzw. Wert eingeleitet werden.

Mittels der vorteilhaften Maßnahmen gemäß Anspruch 9 wird gewährleistet, dass nur die Komponente einer Eingabebewegung in eine bestimmte Richtung Einfluss auf die generierten Sollwerte hat. Bewegungskomponenten quer zu dieser vorbestimmten Richtung oder Achse bleiben ohne Einfluss. Damit werden die Positionsdaten eines zweidimensional auflösenden Positionserfassungssensors, beispielsweise von einem hochauflösenden Touch-Screen einer grafischen Benutzeroberfläche, auf eine eindimensionale und eindeutige Positionsinformation entsprechend einem analogen Schieberegler zur weiteren Generierung der Sollwerte einer Maschinenachse zurückgeführt. Dadurch wird die Bedienbarkeit bzw. das Handling für eine Bedienperson deutlich verbessert bzw. vereinfacht.

Durch die vorteilhaften Maßnahmen gemäß Anspruch 10 wird das Problem gelöst, dass eine Bedienperson grundsätzlich beliebig schnell über den berührungssensitiven Positionserfassungssensor streichen kann, ein Antrieb bzw. eine Maschinenachse aber nicht beliebig schnell dieser vorgegebenen Bewegung bzw. diesen Vorgaben folgen kann oder darf. Hinzu kommt, dass speziell beim manuellen Positionieren einer Maschinenachse beispielsweise zum Schutz der Maschine, von Werkzeugen oder Werkstücken, oder manchmal auch der Bedienperson selbst, die zulässige Höchstgeschwindigkeit gegenüber dem reinen Automatikbetrieb, d.h. gegenüber dem vollautomatischen Betriebsmodus beschränkt wird. D.h., dass das Geschwindigkeitslimit der Maschinenachse nicht zwangsweise durch eine elektromechanische Leistungs- bzw. Performancebeschränkung gegeben ist, sondern auch durch den Betriebsmodus für manuelle Bedienung. Ein weiterer Vorteil dieser Maßnahme liegt darin, dass die Gefahr einer Beschädigung der Maschine bzw. die Gefahr von Schäden gegenüber Sachgegenständen oder Personen minimiert wird.

Von Vorteil sind auch die Maßnahmen nach Anspruch 11, da dadurch ein Maximal-Geschwindigkeitswert von der Achsposition der Maschine abhängig gemacht wird. Insbesondere kann dadurch beispielsweise in der Nähe der Endlagen einer Achse die Maximalgeschwindigkeit in automatisierter Form rechtzeitig reduziert werden. Darüber hinaus kann in Abhängigkeit einer Ausladung bzw. Auskragung eines Kräfte bzw. Momente aufnehmenden Elementes, insbesondere eines Bewegungsarmes, eine Reduzierung bzw. Anpassung der Verfahrgeschwindigkeit vorgenommen werden, um eine möglichst schonende und exakte Positionierung der jeweiligen Maschinenachse zu erzielen.

Von Vorteil sind auch die Maßnahmen nach Anspruch 12, da hierdurch eine Überwachung der Diskrepanz bzw. Abweichung zwischen der in seinem Ausmaß eigentlich unlimitierten Bewegungsveränderung entsprechend der Eingabe der Bedienperson und dem tatsächlich erzielten Bewegungs- oder Ablaufzustand der Maschine oder Anlage zufolge angewendeter oder vorgegebener Begrenzungen erfolgt. Überschreiten dabei die Abweichungen ein bestimmtes Ausmaß bzw. den unteren und/oder oberen Grenzwert, wird eine Warnung an die Bedienperson abgesetzt bzw. wird die Verfahrbewegung automatisch abgebrochen. Damit wird sichergestellt, dass die Diskrepanz zwischen Bedienhandlung und Verfahrbewegung oder Ablaufveränderung nicht zu groß wird und es dadurch nicht zur Verwirrung der Bedienperson und daraus resultierenden Fehlbedienungen durch unangemessene Ausgleichsreaktionen der Bedienperson kommen kann. Insbesondere wird dadurch eine verbesserte, das heißt eine besonders fehlersichere und stets absichtsgemäße Bedienung von Maschinen bzw. Anlagen erzielt.

Erfindungsgemäß wird die Gefahr ungewollter Bedienhandlungen stark verringert. Im Speziellen bei einem kapazitiv auswertenden Positionserfassungssensor ist dadurch das Risiko ungewollter Bedienhandlungen aufgrund der im Wesentlichen kraftlosen oder im Extremfall sogar berührungslosen Auslösung von Eingabe- bzw. Positionsinformationen zuverlässig gebannt. Unter anderem wird durch die angegebene, bewusst durchzuführende Freischaltung die Gefahr von Sach- oder Personenschäden minimiert. Insbesondere kann nur durch bewusste Freischaltung eine nachfolgende Stell- bzw. Verfahrbewegung infolge entsprechend bewusster Bedienung des berührungssensitiven Positionserfassungssensors eingeleitet werden.

Von besonderem Vorteil sind auch die Maßnahmen gemäß Anspruch 13, da dadurch eine Art von "Losbrech-Effekt" implementiert ist. Dabei bewegt sich die Maschinenachse nur dann, wenn das Eingabeorgan, insbesondere ein Finger der Bedienperson, tatsächlich und bewusst ein gewisses Stück bewegt wird. Dadurch wird dem in der Praxis auftretenden Problem begegnet, dass von der Bedienperson üblicherweise bei einem Aufsuchen des Positionserfassungssensors, welcher beispielsweise an einem Bedienpanel ausgebildet ist, der Blick auf das Bedienpanel gerichtet wird, dann das Eingabeorgan, insbesondere der Finger, auf den Positionserfassungssensor gelegt wird und nicht bloß schwebend darüber gehalten wird. Erst dann wird der Blick auf die Maschine bzw. die Maschinenachse gerichtet und die gewünschte Verfahr- bzw. Stellbewegung ohne weiteren Blick auf den Positionserfassungssensor eingeleitet. Es wäre unangenehm für die Bedienperson bzw. wenig zufriedenstellend, wenn die Maschinenachse schon beim bloßen Berühren des Positionserfassungssensors quasi zu zittern beginnen würde oder bereits geringfügig verfahren würde, was aufgrund eines gewissen Rauschsignals bzw. eines Jitter im Zuge der Positionserfassung am Positionserfassungssensor zwangsweise auftreten würde. Außerdem wäre es für den Bediener schwierig bzw. wenig ergonomisch, wenn der Finger nach dem Auffinden des Positionserfassungssensors zunächst nur schwebend darüber gehalten werden müsste, bis die Verfahrbewegung dann tatsächlich begonnen werden kann. Die Maßnahmen nach Anspruch 12 begegnen diesen Problemen und gewährleisten eine möglichst ergonomische bzw. komfortable und intuitive Bedienung von Maschinenachsen bzw. eine kontrollierte Steuerung von Stell- bzw. Verfahrbewegungen.

Maßnahmen zur besonders intuitiven und besonders flexiblen Bedienung sind in Anspruch 14 angegeben. Außerdem wird dadurch der Bedienkomfort maßgeblich gesteigert. Insbesondere können dadurch weitläufige Verstellbewegungen bzw. relativ lange Zeitspannen in Anspruch nehmende Positionierbewegungen plangemäß umgesetzt und komfortabel ausgeführt werden. Insbesondere ist durch die Berührung bzw. Betätigung der vordefinierten Endzone des berührungssensitiven Positionserfassungssensors eine Fortsetzung der Antriebsbewegung bzw. der Verfahrbewegung ermöglicht, ohne dass ein ständiges Nachsetzen bzw. Hinwegwischen über den berührungssensitiven Positionserfassungssensor erforderlich ist. Außerdem wird dann, wenn die gewünschte Endposition erreicht ist, durch Abheben des Eingabeorgans, insbesondere durch Wegnehmen des Fingers der Bedienperson aus der entsprechenden Endzone, eine unmittelbare Deaktivierung bzw. Stillsetzung des zuvor aktivierten Antriebes erreicht. Die Gefahr von Fehlbedienungen wird dadurch minimal gehalten. Insbesondere kann die Bedienperson mit einem einzelnen Bedienelement durch Überstreichen des inneren bzw. zentralen Bewegungsbereiches des Positionserfassungssensors sowohl eine feinfühlige direkte Positionsvorgabe im Nahbereich um eine aktuelle Ausgangslage einer Maschinenachse vornehmen, als auch intuitiv eine variable Geschwindigkeitsvorgabe für gegebenenfalls gewünschte längere Verstellwege machen. Die angegebenen Maßnahmen verbessern somit die Kriterien Bedienkomfort, Intuitivität und Fehlersicherheit in ausgeprägtem Ausmaß.

Vorteilhaft ist auch die Alternative gemäß Anspruch 15. Dabei wird durch eine wischende Betätigung des Positionserfassungssensors ein Anstoß für eine fortgesetzte Maschinenbewegung gegeben. Die entsprechende Maschinenbewegung kann dabei nach dem Abheben des Eingabeorgans, insbesondere des Fingers einer Bedienperson, mit kontinuierlicher Geschwindigkeit fortgesetzt werden oder allmählich verzögert werden. Diese Verzögerung kann dabei stetig oder diskontinuierlich implementiert sein. Insbesondere kann der Trägheitseffekt der Bewegungseinleitung mit oder ohne einer Dämpfung der fortgesetzten Bewegungsgeschwindigkeit umgesetzt werden. Durch erneutes Aufsetzen des Eingabeorgans, insbesondere eines Fingers auf dem Positionserfassungssensor, wobei dieses Aufsetzen bevorzugt an beliebiger Stelle erfolgen kann, wird die entsprechende Antriebsbewegung umgehend gestoppt. Auch durch diese Maßnahmen wird eine intuitive und komfortable Bedienung ermöglicht, wobei durch das erneute Aufsetzen des Eingabeorgans zum Stillsetzen der Maschinenbewegung eine Anwendung für eher unkritische bzw. sicherheitstechnisch unbedenkliche Verfahrbewegungen zu bevorzugen ist.

Die Aufgabe der Erfindung wird unabhängig vom angegebenen erfindungsgemäßen Verfahren auch durch eine Maschinensteuerung gemäß Anspruch 16 gelöst. Die damit erzielbaren technischen Effekte und Vorteile sind den vorhergehenden und den nachstehenden Beschreibungsteilen zu entnehmen.

Erfindungsgemäß wird eine Grob- und Feinpositionierung innerhalb einer örtlich nahe beieinander liegenden, berührungssensitiven Positionserfassungsfläche ermöglicht. Insbesondere kann dadurch den unterschiedlichen Anforderungen in Bezug auf Schnelligkeit der geforderten Verstellbewegung und Dosierbarkeit bzw. Feinfühligkeit der durchzuführenden Verstellbewegung in einfacher Art und Weise Rechnung getragen werden. Die entsprechende Handhabung ist dabei mittels grafischer Darstellungen am berührungssensitiven Positionserfassungssensor besonders intuitiv erkennbar und ist auch der Bedienvorgang rasch ausführbar, ohne dass für die Bedienperson spezielle Erläuterungen oder Schulungsmaßnahmen erforderlich wären.

Von Vorteil sind auch die Maßnahmen gemäß Anspruch 17, da dadurch neben einer funktionalen Trennung auch eine bauliche Trennung der jeweils erforderlichen Komponenten, insbesondere in Bezug auf zwei baulich eigenständige Positionserfassungssensoren geschaffen ist.

Weiters sind die Maßnahmen nach Anspruch 18 von Vorteil, da dadurch neben einer verbesserten Bedienergonomie, beispielsweise im Hinblick auf eine Gestenbedienung, auch ein sicherheitstechnische Verbesserung im Hinblick auf die Einleitung von potentiell gefahrbringenden Maschinenbewegungen erzielt werden kann. Beispielsweise kann als Voraussetzung für die Einleitung einer potentiell gefahrbringenden Stellbewegung eine Betätigung an zwei zueinander distanzierten Positionen vorgesehen sein, wobei eine Betätigungsposition fix vordefiniert ist. Durch entsprechende Auswertung bzw. Überprüfung dieser Auslöse- bzw. Startbedingungen kann dann von der Steuerungseinrichtung bzw. von der Auswerteschaltung in einfacher Art und Weise auf eine dem Bediener bewusste bzw. beabsichtigte Bedienhandlung Rückschluss gezogen werden.

Die Maßnahmen gemäß Anspruch 19 bieten den Vorteil, dass dadurch auch eine quasi blinde bzw. unbeobachtete Bedienung des Positionserfassungssensors ermöglicht ist und dabei die Gefahr ungewollter Bedienhandlungen minimiert wird. Insbesondere wird dadurch die Wahrscheinlichkeit eines sogenannten "Überschießens", das heißt einer Überführung des Fingers bzw. eines sonstigen Betätigungsorgans in den weiteren streifenförmigen Teil- bzw. Betätigungsabschnitt des Positionserfassungssensors minimiert. Insbesondere kann dadurch eine taktile Rückmeldung in Bezug auf den Endpunkt bzw. den Mittelpunkt des berührungssensitiven Positionserfassungssensors erzielt werden. Außerdem kann alleinig durch ein taktiles bzw. haptisches Feedback eine eindeutige Richtungs- bzw. Positionsinformation an die Bedienperson rückgemeldet werden.

Von Vorteil sind weiters die Maßnahmen gemäß Anspruch 20, da dadurch ein intuitives Bedienkonzept geschaffen ist, welches eine unmissverständliche und rasche Stillsetzung von Bewegungsantrieben ermöglicht. Darüber hinaus ist dadurch eine eindeutige Start- bzw. Neutralzone geschaffen, welche missverständliche Bedienhandlungen weitestgehend ausschließt.

Weiters sind die Maßnahmen gemäß Anspruch 21 von Vorteil, da dadurch fehlerhafte bzw. ungewollte Bedienhandlungen zuverlässig ausgeschlossen werden können. Zudem wird durch das grafische bzw. visuelle Feedback an die Bedienperson die jeweils erforderliche Bedienhandlung übersichtlich und einfach nachvollziehbar verdeutlicht. Ferner können dadurch ungewollte Betätigungen, beispielsweise mittels der Handkante oder dem Handballen der Bedienperson in einfacher und zuverlässiger Art und Weise vermieden werden. Somit wird einerseits die Bediensicherheit gesteigert, welche vor allem in Verbindung mit der Bedienung von Maschinen oder Automatisierungsanlagen von erhöhter Bedeutung ist. Außerdem wird dadurch der Bedienkomfort erheblich gesteigert und kann außerdem die jeweils benötigte Bedienzeit reduziert werden, da eine fehlervermeidende Führung von wenigstens einem Finger der Bedienperson ermöglicht ist. Folglich können sich der Blick und die Konzentration der Bedienperson überwiegend auf die entsprechenden Verfahr- bzw. Verstellbewegungen der Maschinenachse bzw. der jeweiligen Antriebsachse richten.

Zum besseren Verständnis der Erfindung wird diese anhand der nachfolgenden Ausführungsbeispiele näher erläutert.

Es zeigen jeweils in stark vereinfachter, schematischer Darstellung:
- Fig. 1: eine beispielhafte technische Einrichtung mit technischen Maßnahmen zur manuell gesteuerten Beeinflussung von Bewegungen oder Abläufen von elektronisch gesteuerten Anlagenteilen oder Maschinen;
- Fig. 2: eine Maschine, insbesondere eine Spritzgießmaschine, in Verbindung mit einem Bedienpanel umfassend wenigstens einen berührungssensitiven Positionserfassungssensor;
- Fig. 3: ein Geschwindigkeits-Sollprofil ausgehend von Bedienhandlungen einer Bedienperson gegenüber einem berührungssensitiven Positionserfassungssensor in Anwendung auf eine Maschinenachse bzw. einen Verstellantrieb;
- Fig. 4: ein Diagramm zur Veranschaulichung von Positions- bzw. Koordinatendaten eines Positionserfassungssensors zur Beeinflussung von Maschinenbewegungen;
- Fig. 5: eine Tabelle zur Veranschaulichung von Positionswerten in Abhängigkeit von definierten Zeitpunkten und daraus resultierende Sollwerte für die Antriebssteuerung;
- Fig. 6: ein beispielhaftes Layout einer Mensch-Maschine-Schnittstelle in Kombination mit wenigstens einem berührungssensitiven Positionserfassungssensor zur Beeinflussung von Maschinenbewegungen bzw. Maschinenachsen;
- Fig. 7: eine erfindungsgemäße Ausführungsform eines Positionserfassungssensors zur manuell gesteuerten Beeinflussung von Maschinenbewegungen bzw. Verstellantrieben;
- Fig. 8: eine Weiterbildung des Positionserfassungssensors nach Fig. 7;
- Fig. 9: eine weitere Ausführungsform eines Positionserfassungssensors zur Bedienung von Maschinenfunktionen;
- Fig. 10: einen Querschnitt durch einen Bedienabschnitt mit einem berührungssensitiven Positionserfassungssensor;
- Fig. 11: eine weitere Ausführungsform des berührungssensitiven Positionserfassungssensors.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

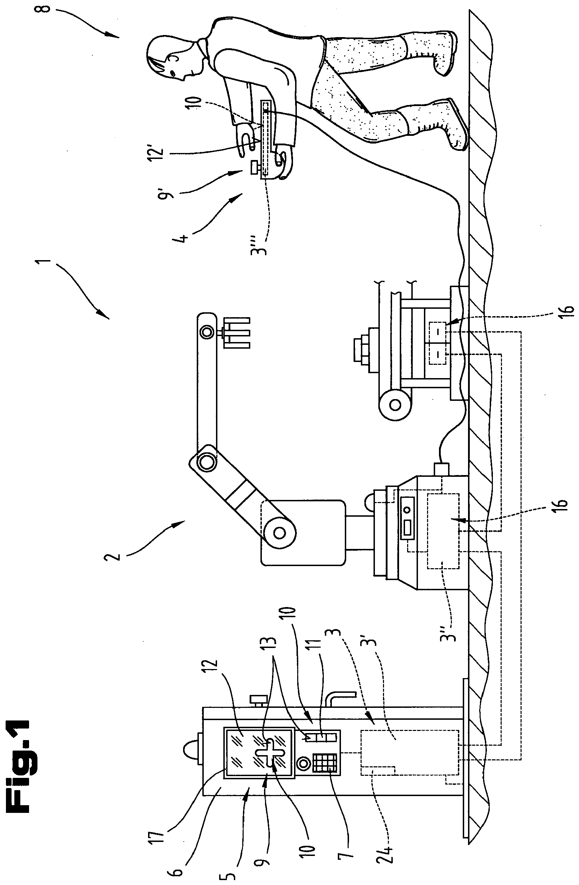

In Fig. 1 ist ein Ausführungsbeispiel einer elektrisch steuerbaren bzw. elektrotechnisch zu steuernden, technischen Einrichtung veranschaulicht. Diese technische Einrichtung ist beispielsgemäß durch eine technische Anlage 1 gebildet, welche zumindest eine Maschine 2 bzw. einen industriellen Roboter umfasst, um auf diese Weise einen Fertigungsprozess zumindest teilweise automatisiert auszuführen. Die technische Einrichtung kann dabei beliebige Anlagen 1, Maschinen 2 und Geräte umfassen, um technische Prozesse, insbesondere Fertigungsprozesse, chemische Prozesse oder dergleichen, zumindest teilweise automatisiert ausführen zu können. Derartige Einrichtungen können somit auch als industrielle Automatisierungsanlagen bzw. als zumindest teilweise automatisierte Produktionsanlagen bezeichnet werden.

Die entsprechende technische Anlage 1 bzw. Maschine 2 umfasst wenigstens eine signal- und datenverarbeitende Steuereinrichtung 3, welche aus einzelnen Steuerungseinheiten 3' - 3'" zusammengesetzt sein kann bzw. verteilt angeordnete Steuerungseinrichtungen 3' - 3'" umfassen kann. Die jeweilige Steuerungsarchitektur für die technische Anlage 1 kann dabei beliebige, aus dem Stand der Technik bekannte Topologien aufweisen. Insbesondere sind zentrale und dezentrale Steuerungsarchitekturen und beliebige Mischformen möglich. So ist es zum Beispiel auch möglich, mobile bzw. tragbare Steuerungseinheiten 3"', insbesondere sogenannte Handterminals 4 in die Steuerungseinrichtung 3 zu integrieren. Ebenso können dabei beliebige, signal- und datentechnische Vernetzungen zwischen den jeweiligen Steuerungseinheiten 3' - 3'" vorgesehen sein.

Ferner kann wenigstens ein Bedienpanel 5 ausgebildet sein, welches mit der Steuerungseinrichtung 3 wirkungsverbunden ist bzw. mit zumindest einer Steuerungseinheit 3' - 3'" der Steuerungseinrichtung 3 baulich kombiniert ist. Das Bedienpanel 5 kann dabei separat zur technischen Anlage 1 positioniert und beispielsweise an einem Schaltschrank 6, an einem Bedienpult oder an einer abgesetzt aufgestellten Steuerungskonsole ausgebildet sein. Im dargestellten Ausführungsbeispiel ist das Bedienpanel 5 in die Seiten- bzw. Frontwand des Schaltschrankes 6 eingebaut. Das heißt, dass das Bedienpanel 5 mobil ausgeführt sein kann, oder aber ortsfest positioniert ist und üblicherweise nicht für eine Repositionierung relativ zur technischen Anlage 1 vorgesehen ist.

Am Bedienpanel 5 bzw. in unmittelbarer Nähe des Bedienpanels 5 ist wenigstens ein Eingabeelement 7 ausgebildet, welches zur Abgabe von Steuerbefehlen an die technische Anlage 1 und/oder zur Eingabe von Daten in die Steuerungseinrichtung 3 und/oder zum Abrufen oder Verändern von Informationen bzw. Daten ausgehend von einer Bedienperson 8 vorgesehen ist. Insbesondere ist eine Ein- und Ausgabe von Daten in Bezug auf die Steuerungseinrichtung 3 bzw. eine Veränderung der Betriebsweise der technischen Anlage 1 anhand der diversen Eingabeelemente 7 ermöglicht. Diese Eingabeelemente 7 können dabei durch diskrete Schalter bzw. Tasten oder durch eine Tastatur, beispielsweise durch eine Folientastatur, gebildet sein.

Entsprechend einer zweckmäßigen Ausgestaltung kann die Steuerungseinrichtung 3 wenigstens ein analog steuerndes bzw. ein quasi-analoges Eingabemittel 9, 9' umfassen. Solche analog steuernden Eingabemittel 9, 9' ermöglichen im Gegensatz zu digital steuernden Tasten oder Schaltern eine proportionale Ansteuerung von zumindest einem Antrieb der elektronisch gesteuerten Anlage 1 oder Maschine 2. Diese quasi analoge bzw. proportionale Steuer- bzw. Dirigierbarkeit von wenigstens einem Antrieb der elektronisch gesteuerten Anlage 1 oder Maschine 2 wird üblicherweise mittels wenigstens einem Joystick, Jog-Wheel, Trackball oder dergleichen umgesetzt. Derartige analog steuernde und diskret aufgebaute Eingabemittel 9, 9' können in der Steuerungseinrichtung 3 implementiert sein, um eine möglichst intuitive bzw. feinfühlige Positionierung bzw. Ansteuerung von Antrieben bzw. von unterschiedlichen Maschinenachsen zu ermöglichen.

Es ist dabei vorgesehen, dieses quasi analoge bzw. analog steuernde Eingabemittel 9, 9', welches von einer Bedienperson 8 manuell zu bedienen bzw. zu betätigen ist, als zumindest eindimensional auflösenden berührungssensitiven Positionserfassungssensor 10 auszubilden. Dieser berührungssensitiver Positionserfassungssensor 10 kann dabei in Art eines Touchpads 11 ausgebildet sein oder als Teilabschnitt eines Touch-Screens 12, 12' ausgeführt sein. Dieser wenigstens eine berührungssensitive Positionserfassungssensor 10 ist zur fortlaufenden Erfassung bzw. Registrierung einer Betätigungsbewegung oder von zumindest einer einzelnen Betätigungsposition innerhalb einer elektronisch auswertbaren Betätigungsfläche 13 des berührungssensitiven Positionserfassungssensor 10 vorgesehen. Der Positionserfassungssensor 10 kann anwendungsspezifisch gefertigt sein und die Betätigungsbewegung zumindest eindimensional, d.h. in eine bestimmte Richtung oder entlang einer vorgegebenen Bahn ermitteln. Vorzugsweise kommen jedoch universelle und in der Regel zweidimensional auflösende Positionserfassungssensoren 10 zur Anwendung, wobei nur ein Teilbereich des gesamten sensorisch erfassbaren Betätigungsbereiches als eigentlicher Eingabebereich bzw. Bewegungsbereich vorgesehen ist und dieser Eingabebereich durch softwaretechnische Mittel festgelegt, überwacht und ausgewertet wird.

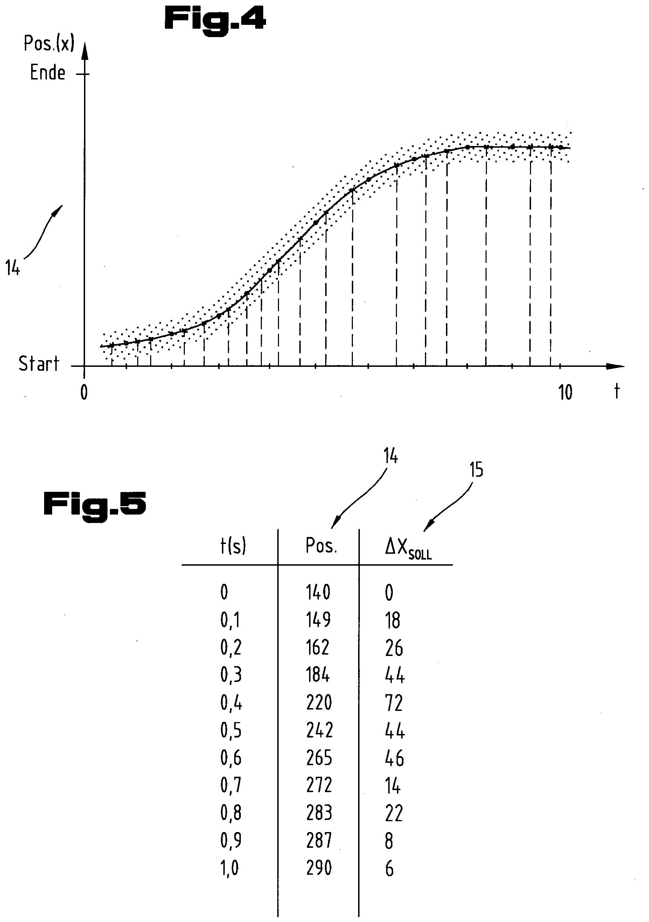

Mit dem wenigstens einen berührungssensitiven Positionserfassungssensor 10, welcher in Art eines Touchpads 11 und/oder als Teilabschnitt eines Touch-Screens 12, 12' ausgeführt sein kann, wird dabei fortwährend eine zeitlich fortlaufende Folge von Vorgabewerten bzw. von Positionswerten 14 - Fig. 4, 5 - ermittelt und in eine korrespondierende zeitliche Folge von Sollwerten 15 für eine Antriebssteuerung 16 - Fig. 1 - umgewandelt. Im dargestellten Ausführungsbeispiel gemäß Fig. 1 ist die Antriebssteuerung 16 durch die Steuerungseinheit 3" gebildet, welche eine Teilkomponente der Steuerungseinrichtung 3 darstellt und beispielsgemäß in der entsprechenden Maschine 2, insbesondere im industriellen Roboter integriert sein kann. Die Antriebssteuerung 16 setzt dabei anhand der jeweils vorliegenden Sollwerte 15 eine entsprechende Bewegung bzw. Positionierung der entsprechenden Antriebsachse bzw. des entsprechenden Antriebssystems um.

Mittels dem wenigstens einen berührungsempfindlichen Positionserfassungssensor 10, welche als quasi analog steuerndes, manuell zu betätigendes Eingabemittel 9, 9' fungiert, wird also eine zeitlich fortlaufende Folge von quasi-analogen Sollwerten 15, insbesondere von Positionswerten, von Geschwindigkeitswerten und/oder von Beschleunigungswerten, für die Antriebssteuerung 16 von zumindest einem Antrieb der elektronisch gesteuerten Anlage 1 oder Maschine 2 generiert. Diese zeitlich fortlaufende Folge von quasi-analogen Sollwerten 15 für die Antriebssteuerung 16 basiert dabei auf den Vorgaben oder Eingaben einer Bedienperson 8 mittels dem bzw. gegenüber dem berührungssensitiven Positionserfassungssensor 10.

Wie vorhergehend erläutert, kann der berührungssensitive Positionserfassungssensor 10 durch wenigstens ein baulich eigenständiges Touchpad 11 oder durch definierte Teilabschnitte eines Touch-Screens 12, 12' gebildet sein. Ein derartiger Touch-Screen 12, 12' kann dabei eine Teilkomponente des Bedienpanels 5 darstellen, oder auch am mobilen Handterminal 4 ausgeführt sein. Ein solcher Touch-Screen 12, 12' vereint ein grafikfähiges Display 17 mit einem berührungssensitiven Touch-Panel, welches dem grafikfähigen Display 17 zumindest abschnittsweise überlagert ist. Der aus wenigstens einem grafikfähigem Display 17 und aus wenigstens einem, diesem Display 17 überlagerten Touch-Panel gebildete Touch-Screen 12, 12' dient zur Beeinflussung der Betriebsweise der Steuerungseinrichtung 3 bzw. der technischen Anlage 1. Das grafikfähige Display 17 ist dabei zur Darstellung zumindest von Teilmengen von insgesamt verfügbaren bzw. notwendigen Informationen für die Bedienperson 8 der technischen Einrichtung vorgesehen.

Das grafikfähige Display 17 dient insbesondere zur Ausgabe von Statusinformationen über den Betriebs- oder Prozesszustand der steuerbaren, technischen Anlage 1. Neben einem grafikfähigen Display 17 mit überlagertem Touch-Panel können in an sich bekannter Art und Weise auch sonstige visuell erfassbare Ausgabemittel, wie zum Beispiel Signalleuchten, Zeigerinstrumente oder dergleichen ausgebildet sein. Fig. 1 veranschaulicht den Einsatz eines berührungssensitiven Positionserfassungssensors 10 zur manuell gesteuerten Beeinflussung von Bewegungen oder Abläufen einer elektronisch gesteuerten Anlage 1 bzw. Maschine 2 in Form einer industriellen Fertigungsanlage umfassend einen industriellen Roboter.

Zweckmäßig ist es auch, wenigstens einen berührungssensitiven Positionserfassungssensor 10 zur manuell gesteuerten Beeinflussung von Bewegungen, insbesondere von Stellbewegungen einer Spritzgießmaschine 18 zur Verarbeitung von Kunststoffen einzusetzen, wie dies in Fig. 2 schematisch veranschaulicht wurde. Eine solche Spritzgießmaschine 18 zur Durchführung eines Kunststoff-Spritzgießverfahrens weist unter anderem ein Maschinenbett 19, eine Schließeinheit 20 zum Öffnen und Schließen eines aufgespannten, mehrteiligen Form-Werkzeuges 21 und eine Plastifiziereinheit 22 auf, mit welcher der Rohstoff aus einem Vorratsbehälter 23 entnommen, in den fließfähigen Zustand überführt und durch eine Düse in das geschlossene Form-Werkzeug 21 gepresst wird. Die verschiedenen Antriebe dieser Spritzgießmaschine 18, insbesondere der Antrieb für die Schließeinheit 20 und/oder der Antrieb für die Plastifiziereinheit 22, insbesondere für dessen Schneckenwelle, welche in der Plastifiziereinheit 22 drehbar gelagert ist und auch in Längsrichtung in Art eines Kolbens verschiebbar ist, eigenen sich gut für eine manuell gesteuerte Beeinflussung mittels einem berührungssensitiven Positionserfassungssensor 10, welcher von einer Bedienperson entsprechend zu betätigen ist.

Ferner umfasst eine solche Spritzgießmaschine 18 eine Steuerungseinrichtung 3, welche zumeist direkt an der Maschine aufgebaut ist oder aber gegenüber dem Maschinenkörper auch abgesetzt angeordnet sein kann. Die Steuerungseinrichtung 3 umfasst wenigstens einen berührungssensitiven Positionserfassungssensor 10 zur manuell gesteuerten Beeinflussung von Bewegungen zumindest eines Antriebes der Spritzgießmaschine 18. Insbesondere werden über den wenigstens einen Positionserfassungssensor 10 zeitliche Folgen von Sollwerten, insbesondere von Positionswerten, Geschwindigkeitswerten oder Beschleunigungswerten für eine Antriebssteuerung 16 von zumindest einem Antrieb der elektronisch gesteuerten Spritzgießmaschine 18 generiert. Eine derartige Antriebssteuerung 16 kann dabei durch eine Umrichterschaltung für einen elektrischen Antriebsmotor gebildet sein. In an sich bekannter Weise kann diese Steuerungseinrichtung 3 wenigstens ein Display 17 bzw. einen Touch-Screen 12 umfassen, wobei die genannten Komponenten zumindest einen Teil der sogenannten Mensch-Maschine-Schnittstelle (HMI - Human Machine Interface) darstellen. Selbstverständlich kann auch wenigstens ein diskret ausgeführtes Eingabeelement 7, beispielsweise ein elektromechanischer Schalter bzw. Taster in der Steuerungseinrichtung 3 implementiert sein.

Vorzugsweise ist der berührungssensitive Positionserfassungssensor 10 durch ein wenigstens eindimensional auflösendes, gegebenenfalls durch ein zweidimensional auflösendes, kapazitives Touchpad 11 gebildet. Ein kapazitives Touchpad 11 wird dabei gegenüber einem nach dem resistiven Wirkungsprinzip arbeitenden Touchpad bevorzugt. Insbesondere ermöglichen Touchpads 11, welche nach dem kapazitiven Wirkungs- bzw. Erfassungsprinzip arbeiten, eine Multi-Touch-Auswertung. Diese Multi-Touch-Fähigkeit eines kapazitiven Touchpads 11 ist insbesondere in Verbindung mit zweidimensional auflösenden, kapazitiven Touchpads 11 zweckmäßig, da dadurch beispielsweise zwei Maschinenachsen über nur ein Touchpad 11 gleichzeitig bedient bzw. gleichzeitig angesteuert bzw. bewegt werden können. Von Vorteil ist dabei weiters, dass kapazitive Touchpads 11 mit ein- oder zweidimensionaler Auflösung bzw. Positionserfassung als standardisierte Komponenten verfügbar sind und ein günstiges Preis- zu Leistungsverhältnis aufweisen. Darüber hinaus ist die erzielbare Auswertungsgenauigkeit und Zuverlässigkeit von derartigen Touchpads 11 auch für Steuerungsanwendungen, insbesondere für Maschinensteuerungen, mittlerweile zufriedenstellend.

Alternativ oder in Kombination zu einem Touchpad 11 ist es auch möglich, als berührungssensitiven Positionserfassungssensor 10 wenigstens einen Touch-Screen 12, 12' vorzusehen. Ein derartiger Touch-Screen 12, 12' ermöglicht typischerweise eine zweidimensionale Auflösung seiner Betätigungsfläche 13 in Bezug auf eine Vielzahl unterschiedlicher Berührungs- bzw. Betätigungspositionen oder Betätigungsbewegungen. Der Touch-Screen 12, 12' arbeitet vorzugsweise ebenso nach dem kapazitiven Funktions- bzw. Erfassungsprinzip, sodass eine Multi-Touch-Fähigkeit vorliegt bzw. eine simultane Erkennung mehrerer, gleichzeitiger Berührungspunkte ermöglicht ist. Die Multi-Touch-Fähigkeit des Touch-Screens 12, 12' ermöglicht somit die gleichzeitige Ansteuerung bzw. Bewegungseinleitung für mehrere Antriebe bzw. Antriebsachsen der entsprechenden Anlage 1 bzw. Maschine 2. Dieser Touch-Screen 12, 12' ist in an sich bekannter Weise einem vorzugsweise hochauflösenden, grafikfähigen Display 17 überlagert. Das Display 17 und der überlagerte Touch-Screen 12, 12' stellen somit ein kombiniertes Ein- und Ausgabemittel für Daten, Statusinformationen bzw. Steuerbefehle dar. Ein Vorteil dieser Ausgestaltung liegt darin, dass das grafikfähige Display 17 bzw. der Touch-Screen 12, 12' als standardmäßig verfügbare Komponenten gelten und einen zuverlässigen Positionserfassungssensor 10 in Bezug auf Bedienhandlungen einer Bedienperson 8 gegenüber einer Maschine 2 oder Anlage 1 bilden können. Außerdem können dadurch vielfältig ausgeprägte, virtuelle bzw. grafisch implementierte Eingabemittel 9, 9' ausgeführt werden. Durch eine softwarebasierende Implementierung ist dabei eine hohe Flexibilität in Bezug auf allfällige Veränderungen bzw. Anpassungen des Benutzerinterface erzielt. Insbesondere ist eine softwaregesteuerte Anpassung von Größe und visuellem Erscheinungsbild des Eingabebereichs in einfacher Art und Weise ermöglicht. Auch eine Kombination in Verbindung mit variierenden Statusinformationen bzw. sonstigen betriebsrelevanten Informationen ist durch das Display 17 in einfacher Art und Weise ermöglicht.

In den Fig. 3 bis 5 sind diverse Maßnahmen zur Erfassung der jeweiligen Bedien- bzw. Betätigungshandlungen einer Bedienperson 8 und zur Umsetzung in entsprechende Steuerbefehle bzw. Sollwerte 15 für einen Antrieb einer Maschine 2 bzw. Anlage 1 schematisch und beispielhaft veranschaulicht. Die Bedienhandlungen einer Bedienperson 8 werden dabei bevorzugt mittels wenigstens einem Finger der Bedienperson 8 ausgeführt. Vor allem bei der bevorzugten Verwendung von kapazitiv auswertenden Positionserfassungssensoren 10 ist eine Bedienhandlung mittels wenigstens einem Finger von besonderem Vorteil. Alternativ oder in Kombination dazu ist es aber auch möglich, spezielle Eingabeorgane, beispielweise stiftartige Eingabehilfsmittel oder dergleichen, zu verwenden. Insbesondere wird zur Vorgabe von Sollwerten 15 bzw. von Steuerbefehlen für die Antriebssteuerung 16 ein entsprechendes Überstreichen bzw. Berühren des berührungssensitiven, kapazitiv auswertenden Positionserfassungssensors 10 mit dem Finger einer Bedienperson 8 vorgenommen.

Wie am besten aus den Fig. 4, 5 ersichtlich ist, ist es zweckmäßig, die einzelnen Vorgabe- oder Positionswerte 14, aus welchen eine zeitliche Folge von Sollwerten 15 für die Antriebssteuerung 16 ermittelt wird, in einem Zeitabstand von weniger als 0,25 Sekunden, insbesondere von weniger als 0,1 Sekunden zu ermitteln. Diese Ermittlung erfolgt dabei durch wenigstens einen Prozessor der Steuerungseinrichtung 3 bzw. durch eine in der Steuerungseinrichtung 3 implementierten Auswertungsschaltung 24 - Fig. 1 - welche mit dem Positionserfassungssensor 10 direkt oder indirekt verbunden ist. Durch die besagten Zeitabstände bzw. durch die entsprechende Abtastfrequenz gegenüber dem Positionserfassungssensor 10 werden Verzögerungszeiten ausreichend klein gehalten, das heißt in einem für die Bedienperson 8 bzw. für die Maschinensteuerung akzeptablen Rahmen gehalten. Darüber hinaus bleiben dadurch die Anforderungen an die Auswertungsschaltung 24 bzw. an die Steuerungseinrichtung 3 in einem leistungstechnisch günstigen Bereich, sodass ein optimales Kosten- zu Leistungsverhältnis erzielt wird.

Zweckmäßig kann es dabei auch sein, dass im Zuge der Umwandlung der zeitlichen Folge von Vorgabe- bzw. Positionswerten 14 vom Positionserfassungssensor 10 in die zeitliche Folge von Sollwerten 15 für die Antriebssteuerung 16 eine Glättung über mehrere nacheinander ermittelte Vorgabe- oder Positionswerte 14 vorgenommen wird, oder eine Glättung über mehrere unmittelbar aufeinander folgende Sollwerte 15 vorgenommen wird. Diese Glättung kann durch beliebige aus dem Stand der Technik bekannte mathematische Methoden umgesetzt werden. Beispielsweise kann eine Polynom-Approximation zur Glättung bzw. Bedämpfung von starkem Über- bzw. Unterschwingen eingesetzt werden. Vorteilhaft ist auch, dass sich dadurch die Rohdaten des berührungsempfindlichen Positionserfassungssensor 10, welche typischerweise mit einem gewissen Rauschen bzw. Jitter behaftet sind, nicht unmittelbar in den generierten Sollwerten 15 für die Antriebssteuerung 16 niederschlagen.

Gemäß einer praktikablen Maßnahme ist vorgesehen, dass die einzelnen Werte der Folge von Sollwerten 15 für die Antriebssteuerung 16 in einem zeitlichen Abstand ermittelt werden, welcher im Vergleich zu den zeitlichen Abständen der ermittelten Vorgabe- oder Positionswerte 14 des berührungssensitiven Positionssensors 10 unterschiedlich ist. Insbesondere ist es zweckmäßig, die Sollwerte 15 für die Antriebssteuerung 16 in Bezug auf zeitlich konstante Abstände zu definieren bzw. festzulegen. Für eine praktikable Umsetzung ist es jedoch zweckmäßig, die Vorgabe- oder Positionswerte 14, welche vom berührungssensitiven Positionserfassungssensor 10 bereitgestellt werden, in zeitlich variierenden Abständen zu ermitteln bzw. von der Auswertungsschaltung 24 erfassen zu lassen. Aufbauend auf die jeweiligen Vorgabe- oder Positionswerte 14, welche in zeitlich zumindest geringfügig variierenden Abständen ermittelt bzw. bestimmt werden, können dann die Sollwerte 15 für die Antriebssteuerung 16 für einen vorbestimmten, zeitlich konstanten Abstand ermittelt bzw. errechnet werden. Insbesondere ist es zweckmäßig, die Sollwerte 15 für die Antriebssteuerung 16 in einem streng periodischen Zeitraster festzulegen bzw. vorzugeben, wobei die entsprechend periodischen Sollwerte 15 durch Interpolation oder Extrapolation der ermittelten Vorgabe- oder Positionswerte 14 des berührungssensitiven Positionserfassungssensor 10 ermittelt werden. Vorteilhaft ist dabei, dass die Auswertung des berührungssensitiven Positionserfassungssensors 10 bzw. dessen Abfrageroutine in eine Betriebssystemebene eingebettet sein kann, in der auch verschiedene andere, teils laufzeitintensive Prozesse ablaufen und somit ein starres Zeitraster nicht garantiert werden kann. Durch die Umwandlung bzw. Umrechnung in adäquate Sollwerte 15 zu fixen, periodischen Zeitpunkten wird dann den Erfordernissen von allgemein gebräuchlichen, standardisierter Antriebssteuerungen 16, wie zum Beispiel Umrichter-Schaltvorrichtungen, in einfacher und zuverlässiger Art und Weise Rechnung getragen. Insbesondere werden Abweichungen in Bezug auf die variierenden Zeitabstände zwischen den einzelnen Vorgabe- und Positionswerten 14 und den Zeitabständen zwischen aufeinanderfolgenden Sollwerten 15, wie sie für die Antriebssteuerung 16 erforderlich sind, durch Interpolation oder vielmehr durch Extrapolation, ermittelt bzw. errechnet. Diese rechnerische Ermittlung kann beispielsweise auch über einen Polynomansatz vorgenommen werden.

Entsprechend einer vorteilhaften Maßnahme ist vorgesehen, dass während einer Verfahrbewegung einer Maschinenachse oder eines Antriebes der angesteuerten Maschine 2 oder Anlage 1 eine fortlaufende Abfrage, insbesondere eine entsprechende Abfrageroutine zur Erfassung von Vorgabe- oder Positionswerten 14 des berührungssensitiven Positionssensors 10 überwacht wird und beim Ausbleiben der Abfrage oder von Abfrageergebnissen über einen festgelegten Zeitraum hinaus, von der Steuerungseinrichtung 3 und/oder der Antriebssteuerung 16 ein Abbruch der Verfahrbewegung veranlasst oder eingeleitet wird. Dadurch wird einem unter Umständen sicherheitskritischen Auseinanderdriften zwischen der Vorgabe- bzw. Bedienhandlung und der Ausführung durch die Maschine oder Anlage in zuverlässiger Art und Weise entgegengewirkt.

Zweckmäßig ist es weiters, wenn die Veränderung, insbesondere die Betragsveränderung der Sollwerte 15 für die Antriebssteuerung 16 innerhalb eines bestimmten Zeitabstandes im Wesentlichen proportional zu dem in diesem Zeitabstand überstrichenen Weg auf der Betätigungsfläche 13 des berührungssensitiven Positionserfassungssensors 10 ist. Durch eine derartige Proportional-Steuerung kann eine intuitive und zielgenaue Positionierung bzw. Ansteuerung des jeweiligen Antriebes gewährleistet werden.

Entsprechend einer zweckmäßigen Ausgestaltung ist vorgesehen, dass die Veränderung der Sollwerte 15 für die Antriebssteuerung 16 innerhalb eines bestimmten Zeitabstandes im Wesentlichen proportional zu der in diesem Zeitabstand festgestellten Distanz einer aktuellen Betätigungsposition im Vergleich zu einem ersten bzw. initialen Berührungspunkt auf der Betätigungsfläche 13 des berührungssensitiven Positionserfassungssensors 10 ist. Dadurch können vorgegebene Ist-Positionen der Maschinenachse bzw. des Antriebes verändert werden, ohne dass eine Rückstellung bzw. ein Start ausgehend von einer definierten Null-Position erforderlich ist. Besonders zweckmäßig ist es, wenn zusätzlich zur festgestellten Distanz zwischen einem ersten Berührungspunkt und einer aktuellen Betätigungsposition auch die Richtung oder Orientierung der aktuellen Betätigungsposition im Vergleich zum ersten Berührungspunkt, insbesondere in Bezug auf eine Koordinatenachse, ermittelt wird und das Ermittlungsergebnis für die Veränderung der Sollwerte 15 für die Antriebssteuerung 16 mitbestimmend ist bzw. darin einfließt. Dadurch können auch beliebige Richtungsänderungen bzw. Vorwärts- und Rückwärtsbewegungen ausgehend von beliebigen Ausgangspunkten durch entsprechende Betätigung des berührungssensitiven Positionserfassungssensors 10 eingeleitet werden.

Insbesondere ist es zweckmäßig, die Auswertung durch die Auswertungsschaltung 24 bzw. durch die Steuerungseinrichtung 3 derart auszuführen, dass die Sollwerte 15 für die Antriebssteuerung 16 in Abhängigkeit einer Veränderung der Betätigungsposition entlang einer bestimmten Richtung oder Dimension, insbesondere in Bezug auf eine bestimmte Koordinatenachse, ermittelt und festgelegt werden. Dadurch ist in einfacher Art und Weise auch eine Richtungsänderung bzw. Richtungsumkehr von beliebigen Maschinenachsen bzw. deren Antriebe umsetzbar.

Zweckmäßig kann es auch sein, eine maximal vornehmbare Veränderung 25 - Fig. 3 - der Sollwerte 15 für die Antriebssteuerung 16 in Bezug auf einen bestimmten Zeitabstand 26 durch einen oberen Grenzwert zu begrenzen. Entsprechend dem Beispiel gemäß Fig. 3 kann eine maximale Veränderung eines Geschwindigkeitswertes innerhalb eines bestimmten Zeitabstandes 26, das heißt eine maximale Beschleunigung, in der Steuerungseinrichtung 3 bzw. in der Auswertungsschaltung 24 definiert sein. Zweckmäßig ist es dabei, wenn die maximal vornehmbare Veränderung 25 der Sollwerte 15 von der maximal zulässigen Bewegungsgeschwindigkeit und/oder von der maximal möglichen Bewegungsgeschwindigkeit und/oder von der von einer Bedienperson 8 noch überschau- und kontrollierbaren Bewegungsgeschwindigkeit des Antriebes bzw. der entsprechenden Maschinenachse abhängig gemacht werden. Fig. 3 zeigt dabei ein Diagramm 27 mit einer Geschwindigkeits-Sollkurve 28, wie sie aus den diversen Bedienhandlungen einer Bedienperson 8 gegenüber dem berührungssensitiven Positionserfassungssensor 10 ermittelt bzw. abgeleitet wurde. Diese Geschwindigkeits-Sollkurve 28 wird in Sollwerte 15 für die Antriebssteuerung 16 konvertiert, sodass der entsprechende Antrieb gemäß dieser Geschwindigkeits-Sollkurve 28 betrieben bzw. angesteuert wird.

Ein maximal möglicher bzw. maximal zugelassener Grenzwert 29 für die Geschwindigkeit, die Beschleunigung oder die Verzögerung eines Antriebes ist in Fig. 3 im Diagramm 27 auf der Ordinate veranschaulicht. Entsprechend einer zweckmäßigen Ausführung ist vorgesehen, dass der obere Grenzwert 29 von der Steuerungseinrichtung 3 variabel angepasst wird. Diese Anpassung des oberen Grenzwertes 29 in Bezug auf Beschleunigung, Verzögerung und/oder Geschwindigkeit kann dabei vom Betriebszustand der Maschine 2 bzw. Anlage 1 und/oder von der aktuellen Position des Antriebes abhängig gemacht werden, wobei diese Abhängigkeiten und Kriterien von der Steuerungseinrichtung 3 ausgewertet und entsprechend berücksichtigt werden.

Entsprechend einer kombinatorischen oder alternativen Maßnahme ist vorgesehen, dass aus der Bewegungsvorgabe durch den berührungssensitiven Positionserfassungssensor 10 und/oder aus sensorisch erfassten Messwerten der von der Maschine 2 oder Anlage 1 ausgeführten Bewegung oder Ablaufveränderung und/oder aus den von der Steuerungseinrichtung 3 oder der Antriebssteuerung 16 generierten Steuerbefehlen eine Kenngröße ermittelt und mit einem oberen Grenzwert verglichen wird. Darauf aufbauend wird bei einem Überschreiten des oberen Grenzwertes die Bewegung oder Ablaufveränderung der Maschine 2 oder Anlage 1 umgehend oder nach einer definiert begrenzten Nachlaufphase gestoppt, und/oder es wird bei definierter Annäherung der Kenngröße an den oberen Grenzwert oder bei einem Überschreiten eines unteren Grenzwertes, welcher niedriger als der obere Grenzwert ist, der Bedienperson 8 die Nähe oder Annäherung zum oberen Grenzwert durch Abgabe eines Warnsignals signalisiert. Dieses Warnsignal für die Bedienperson 8 kann dabei akustisch und/oder optisch und/oder haptisch, insbesondere durch Vibration, abgegeben werden. Die Einleitung bzw. Generierung erfolgt dabei durch die Steuerungseinrichtung 3 und/oder durch die Antriebssteuerung 16.

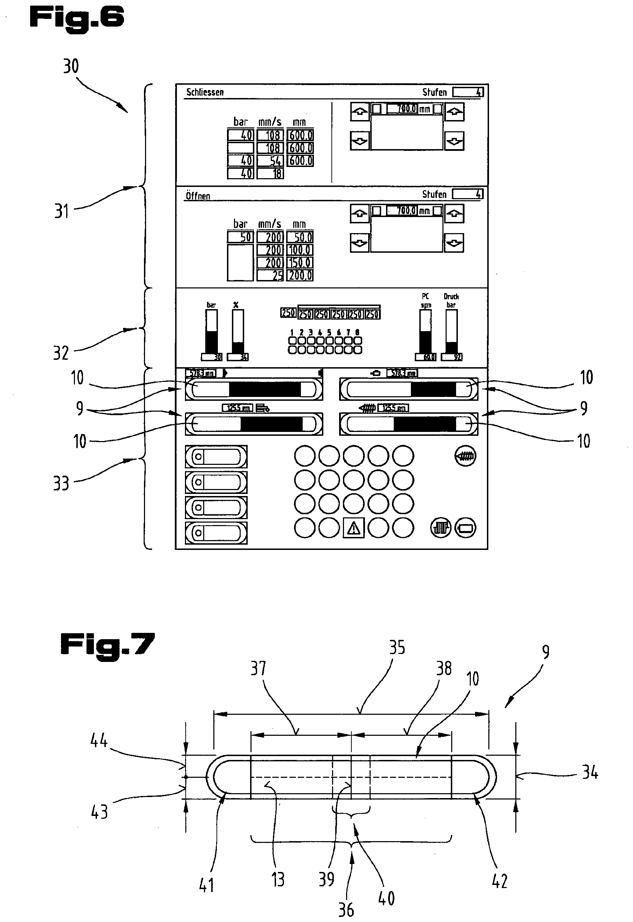

In Fig. 6 ist ein Ausführungsbeispiel eines Layouts der Steuerungseinrichtung 3, insbesondere ein Maschinensteuerungslayout 30 beispielshaft veranschaulicht. Dieses Layout umfasst dabei eine Mehrzahl von Statusfeldern, Eingabefeldern und Ausgabefeldern, welche je nach Zweckmäßigkeit diverse Daten anzeigen bzw. eine Veränderung von Einstellungen ermöglichen. Das entsprechende grafische Layout wird dabei durch Software-Anpassung der Steuerungseinrichtung 3 bewerkstelligt und über das Display 17 visualisiert. Das Maschinensteuerungslayout 30 umfasst zweckmäßigerweise drei Visualisierungs- bzw. Layoutabschnitte 31-33. In einem ersten Layoutabschnitt 31 sind Ein- und Ausgabemasken vorgesehen, die eine Anzeige und/oder Veränderung von Werten zu diversen Parametern der Maschinensteuerung ermöglichen. In einem zweiten Layoutabschnitt 32 sind Statusanzeigen vorgesehen, welche Statusinformationen über diverse Maschinenparameter bzw. Prozessparameter liefern bzw. anzeigen. In einem dritten Layoutabschnitt 33 ist eine Bedienung bzw. Beeinflussung von Maschinenachsen bzw. Maschinenbewegungen vorgesehen. Insbesondere sind in diesem dritten Layoutabschnitt 33 mehrere Eingabemittel 9 konzentriert, welche eine quasi analoge bzw. proportionale Ansteuerung von Antrieben bieten bzw. eine proportionale Bewegungssteuerung von Maschinenachsen ermöglichen und dabei als berührungssensitive Positionserfassungssensoren 10 ausgeführt sind.

In Verbindung mit einem berührungssensitiven Positionserfassungssensor 10 zur Ansteuerung von Maschinenachsen bzw. -antrieben kann es zweckmäßig sein, eine Freischaltung vor der Aktivierung eines Antriebes zu implementieren. Insbesondere ist es zweckmäßig, erst nach Ausführung einer vordefinierten, charakteristischen Bedienhandlung gegenüber dem berührungssensitiven Positionserfassungssensor 10, insbesondere durch doppeltes oder mehrfaches Antippen oder Berühren des berührungssensitiven Positionserfassungssensors 10 innerhalb einer vorbestimmten, begrenzten Zeitspanne, oder erst nach Ausführung eines vorbestimmten Bewegungsmusters am berührungssensitiven Positionserfassungssensor 10, eine Freischaltung bzw. eine Aktivierung des entsprechenden Antriebes und/oder eine Freigabe zur Veränderung der Sollwerte 15 für die Antriebssteuerung 16 und/oder eine wirkungsmäßige Freischaltung des berührungssensitiven Positionserfassungssensors 10 vorzunehmen bzw. einzuleiten. Unbeabsichtigte bzw. irrtümliche Fehlbedienungen von Maschinen bzw. Maschinenachsen können dadurch in einfacher und zuverlässiger Art und Weise ausgeschlossen werden. Insbesondere wird dadurch verhindert, dass unkontrollierte Aktivierungen bzw. Bewegungen von Antrieben eingeleitet werden. Außerdem wird durch eine bewusste Freischaltung bzw. Aktivierung eines Antriebes die Gefahr von Unfällen bzw. die Gefahr von Personen- oder Sachschäden minimiert.

In Fig. 7 ist eine erfindungsgemäße Ausführungsform eines berührungssensitiven Positionserfassungssensors 10 zur Ansteuerung von Antrieben bzw. Maschinenachsen veranschaulicht. Die Betätigungsfläche 13 dieses Positionserfassungssensors 10 ist dabei streifenartig ausgeführt, d.h. sie besitzt eine deutlich größere Längs- als Breitenerstreckung. Eine Breite 34 kann dabei in etwa einer Fingerbreite entsprechen, d.h. zwischen 8 und 30 mm, bevorzugt in etwa 15 mm betragen. Eine Länge 35 des berührungssensitiven Positionserfassungssensors 10, insbesondere von dessen Betätigungsfläche 13, beträgt ein Vielfaches der Breite 34. Dessen Länge 35 beträgt zweckmäßigerweise zwischen 5 und 15 cm, typischerweise in etwa 10 cm. Durch Berühren, insbesondere durch eine wischende Betätigung gegenüber der Betätigungsfläche 13, wird der damit entsprechend wirkungsverbundene Antrieb angesteuert, d.h. aktiviert bzw. bewegt. Die Relativbewegung eines Fingers einer Bedienperson gegenüber dem Positionserfassungssensor 10 ist dabei entsprechend einer vorteilhaften Ausführungsform proportional zur Bewegung des damit wirkungsverbundenen Antriebs bzw. der damit zu steuernden Maschinenachse.

Die Betätigungsfläche 13 des Positionserfassungssensors 10 kann vorzugsweise in bestimmte Teilabschnitte bzw. Referenzpunkte unterteilt sein. Zweckmäßig ist es, einen Bewegungsbereich 36 zu definieren, welcher sich über den größten Teilabschnitt der positionssensitiven Länge 35 erstreckt. Bei einer Fingerbetätigung bzw. einer Streichbewegung mit dem Finger innerhalb dieses Bewegungsbereiches 36 wird eine korrespondierende Bewegung der Maschinenachse bzw. des jeweiligen Antriebes ausgelöst. Der Bewegungsbereich 36 kann dabei in einen ersten Richtungsbereich 37 und in wenigstens einen weiteren Richtungsbereich 38 unterteilt sein. Im ersten Richtungsbereich 37 kann dabei eine Bewegungseinleitung nach links und im weiteren Richtungsbereich 38 kann eine dazu entgegengesetzte Bewegungseinleitung, insbesondere eine Bewegung nach rechts, initiiert werden. Ebenso ist es möglich, den ersten und den wenigstens einen weiteren Richtungsbereich 37, 38 durch Bewegungsrichtungen nach unten bzw. oben zu definieren bzw. zusätzliche Auslenkungsrichtungen bzw. Bewegungsrichtungen innerhalb des Bewegungsbereiches 36 vorzusehen. Dies insbesondere dann, wenn der Positionserfassungssensor 10 eine zweidimensional auflösende Betätigungsfläche 13 aufweist und beispielsweise Bewegungen in X- und Y-Richtung abbilden bzw. detektieren kann.

Zweckmäßig ist es, an der Betätigungsfläche 13 bzw. in Bezug auf die Erstreckung des Positionserfassungssensors 10 eine Null- oder Startposition 39 festzulegen. Beispielsgemäß ist diese Null- oder Startposition 39 im Mittel bzw. Zentrum des Bewegungsbereiches 36 definiert. Entsprechend einer praktikablen Ausbildung ist vorgesehen, einen Nahbereich 40 um die vordefinierte Null- oder Startposition 39 zu definieren und eine Veränderung des Sollwertes 15 der Antriebssteuerung 16 oder eine Freigabe des zu bedienenden Antriebs erst dann vorzunehmen, wenn ein Eingabeorgan, insbesondere ein Finger der Bedienperson 8 über eine bestimmte Distanz hinausbewegt wird oder über den vordefinierten Nahbereich 40 hinausbewegt wird. Dadurch wird eine Art von "Losbrech-Effekt" implementiert. Insbesondere bewegt sich die Maschinenachse nur dann, wenn der Finger tatsächlich bewusst ein gewisses Stück entlang des Positionserfassungssensors 10 bewegt wurde. Das bloße Aufsetzen des Fingers bzw. das Aufsuchen der Null- oder Startposition 39 führt somit noch nicht zu einem ungewollten Aktivieren des Antriebes bzw. nicht zu einer Bewegung der Maschinenachse.

Entsprechend einer zweckmäßigen Weiterbildung umfasst der berührungssensitive Positionserfassungssensor 10 wenigstens eine grafisch und/oder softwaretechnisch, insbesondere auswertungstechnisch, vordefinierte Endzone 41, 42 in wenigstens einem seiner distalen Endabschnitte. Entsprechend dem dargestellten Ausführungsbeispiel gemäß Fig. 7, in welchem ein streifenförmig ausgebildeter Positionserfassungssensor 10 veranschaulicht ist, sind bevorzugt in den beiden, einander gegenüberliegenden Endabschnitten jeweils eine Endzone 41, 42 vorgesehen, insbesondere software- bzw. auswertungstechnisch definiert und/oder für eine Bedienperson 8 visuell wahrnehmbar gekennzeichnet. Diese bevorzugt softwaretechnisch oder auch baulich definierte Endzone 41, 42 in wenigstens einem Endabschnitt des zweckmäßigerweise streifenförmig verlaufenden Positionserfassungssensors 10 wird durch die Auswertungsschaltung 24 bzw. durch die Steuerungseinrichtung 3 eine spezielle Funktion bzw. Arbeitsweise zugeordnet, wobei diese Implementierung typischerweise softwaretechnisch erfolgt, insbesondere durch entsprechende Programmierung der Auswertungsschaltung 24 bzw. der Steuerungseinrichtung 3 umgesetzt wird. Eine zweckmäßige Funktion dieser wenigstens einen Endzone 41, 42 liegt darin, dass in dieser wenigstens einen Endzone 41, 42 ein spezieller Tasterbetrieb für den Antrieb bzw. für die Maschinenachse umgesetzt wird. Insbesondere ist es zweckmäßig, den angesteuerten Antrieb solange aktiviert zu halten bzw. die Maschinenachse solange zu verfahren, bis das Eingabeorgan der Bedienperson, insbesondere dessen Finger, von der entsprechenden Endzone 41, 42 wieder abgehoben wird.

Insbesondere ist es zweckmäßig, wenn in wenigstens einem Rand- oder Endabschnitt des berührungssensitiven Positionserfassungssensors 10 eine Endzone 41, 42 definiert ist, und dass bei einer unterbrechungsfrei überstreichenden Betätigungsbewegung mittels einem Eingabeorgan, insbesondere einem Finger einer Bedienperson, ausgehend von einem zentralen oder inneren Bewegungsbereich 36 in eine der Endzonen 41, 42, die Änderung der Sollwerte 15 ab dem Moment des Übertritts in die jeweilige Endzone 41, 42 unabhängig von der weiteren Veränderung der Betätigungsposition fortgesetzt, insbesondere konstant beibehalten wird, bis das Eingabeorgan die Endzone 41, 42 wieder verlässt, insbesondere von der Endzone 41, 42 abgehoben wird.

Eine typische Funktionsweise eines streifenförmig vordefinierten Positionserfassungssensors 10 ist kann dabei wie folgt sein: Wird das Eingabeorgan der Bedienperson 8, insbesondere dessen Finger, innerhalb des Bewegungsbereiches 36 bewegt, so bewirkt dies eine entsprechende Positionsänderung der Maschinenachse, insbesondere ein Verfahren des entsprechenden Antriebes in der jeweils vorgegebenen Bewegungsrichtung. Aus der Geschwindigkeit der Fingerbewegung innerhalb des Bewegungsbereiches 36 wird ein Faktor bzw. ein Sollwert 15 für das Geschwindigkeitsprofil ermittelt. Ein Stoppen der Fingerbewegung innerhalb des Bewegungsbereiches 36 führt unmittelbar zu einem Stoppen der Maschinenachse bzw. zu einer Deaktivierung des entsprechenden Antriebes. D.h. die Fingerbewegung innerhalb des Bewegungsbereiches 36 wird in eine proportionale Bewegung der Maschinenachse bzw. des hierfür zuständigen Antriebes umgesetzt. Innerhalb des Bewegungsbereiches 36 findet also eine mit der Fingerbewegung korrespondierende bzw. korrelierende Antriebsbewegung statt, d.h. dass innerhalb des Bewegungsbereiches 36 ein Start-Stopp-Betrieb der Maschinenachse in Korrelation zur Fingerbewegung, insbesondere zu dessen Bewegungsgeschwindigkeit bzw. zu dessen Beschleunigung oder Verzögerung, umgesetzt ist.

Die Funktion der wenigstens einen Endzone 43, 42 innerhalb der berührungssensitiven Betätigungsfläche 13 besteht darin, dass dann, wenn das Eingabeorgan, insbesondere der Finger der Bedienperson 8 aus dem Bewegungsbereich 36 hinaus in eine der vordefinierten Endzonen 41, 42 bewegt wird, der von der Auswertungsschaltung 24 bzw. von der Steuerungseinrichtung 3 ermittelte Geschwindigkeitsfaktor bestehen bleibt bzw. beibehalten wird, bis der Finger abgehoben wird, insbesondere von der jeweiligen Endzone 41, 42 entfernt wird. Insbesondere ist vorgesehen, dass der Antrieb solange aktiviert bleibt bzw. die Maschinenachse solange mit dem im Bewegungsbereich 36 ermittelten Geschwindigkeitsfaktor weiterbewegt wird, bis der Finger von der Endzone 41, 42 abgehoben wird. D.h., dass eine wischende Bewegung des Fingers hinein in eine der Endzonen 41, 42 eine Fortführung der Antriebsbewegung bzw. der Maschinenbewegung mit dem zuletzt gültigen Geschwindigkeitsfaktor und Richtungswert bewirkt, solange bis der Finger von der entsprechende Endzone 41 bzw. 42 abgehoben wird. Insbesondere wird durch unmittelbare Überführung des Fingers in eine der Endzonen 41, 42 eine Fortsetzung der zuletzt eingeleiteten Bewegung mit den zuletzt gültigen Sollwerten 15 bewirkt und erst unmittelbar mit dem Abheben des Fingers aus der jeweiligen Endzone 41, 42 ein Stoppen der Maschinenachse bzw. eine Deaktivierung des Antriebes von der Antriebssteuerung 16 umgesetzt. Diese Endzonen 41, 42 sind also mit einem fortgesetzten Tastbetrieb zu vergleichen, wobei innerhalb des Bewegungsbereiches 36 die Vorgabewerte, insbesondere für die Verfahr- bzw. Antriebsgeschwindigkeit ermittelt werden. Ein besonderer Vorteil dieser Maßnahme liegt darin, dass hierdurch auch weitläufigere Bewegungsstrecken bzw. länger andauernde Verfahrbewegungen umgesetzt werden können, ohne dass ein wiederholtes Nachsetzen des Fingers innerhalb des Bewegungsbereiches 36 erforderlich ist. Ein mehrmaliges Stoppen und Wiederaufnehmen der Antriebsbewegung wird also durch die Implementierung der zuvor erläuterten Endzonen 41, 42 vermieden und kann somit ein kontinuierlicher Bewegungsablauf auch mit einem endlichen, d.h. mit einem in seiner Länge begrenzten, berührungssensitiven Positionserfassungssensor 10 erzielt werden.

Gemäß einer weiteren Maßnahme ist vorgesehen, dass dann, wenn das Eingabeorgan, insbesondere der Finger, direkt in einer der Endzonen 41, 42 aufgesetzt wird, der Antrieb mit Geschwindigkeitsfaktor 1 bzw. mit einem steuerungsseitig vordefinierten Geschwindigkeitssollprofil aktiviert wird. D.h., dass ein direktes Aufsetzen in einer der Endzonen 41, 42 einem herkömmlichen Tasterbetrieb gleichgesetzt wird, bei welchem die entsprechende Antriebsbewegung solange aktiv ist, solange der Finger in der entsprechenden Endzone 41, 42 aufgesetzt bleibt. Das Geschwindigkeitsprofil bzw. der Sollwert für die Antriebsgeschwindigkeit wird dabei fix vorgegeben und kann steuerungstechnisch den Faktor 1 aufweisen.

Entsprechend einer zweckmäßigen Maßnahme ist somit in wenigstens einem Endabschnitt des berührungssensitiven Positionserfassungssensors 10 eine Endzone 41, 42 definiert. Eine Verstellbewegung oder Ansteuerung des Antriebs der Maschine 2 oder Anlage 1 durch die Antriebssteuerung 16, welche Ansteuerung von einer Bedienperson 8 durch eine wischende Betätigung des berührungssensitiven Positionserfassungssensors 10 mittels einem Eingabeorgan, insbesondere mit einem Finger einer Bedienperson 8, vordefiniert wurde, wird infolge einer bevorzugt unterbrechungsfreien bzw. fortgesetzten Überführung von dem die wischende Betätigung ausführenden Eingabeorgan in eine der Endzonen 41, 42 solange beibehalten, bis das die wischende Betätigung ausführende Eingabeorgan, insbesondere ein Finger der Bedienperson, von der Endzone 41, 42 des berührungssensitiven Positionserfassungssensors 10 wieder abgehoben wird. Dadurch werden wiederholte Nachsetzbewegungen am Positionserfassungssensor 10 erübrigt, was insbesondere dann, wenn vom entsprechenden Antrieb längere Wegstrecken bzw. Verstellwege umzusetzen sind, von besonderem Vorteil ist. Darüber hinaus wird ein unmittelbarer Stopp des entsprechenden Antriebs eingeleitet, sobald das Eingabeorgan, insbesondere der Finger, von der jeweiligen Endzone 41, 42 des Positionserfassungssensors 10 wieder abgehoben wird. Dadurch ist eine besonders intuitive und fehlerfreie und gleichzeitig komfortable Bedienung der jeweiligen Antriebe bzw. Maschinenachsen geschaffen.

Zweckmäßig ist es auch, wenn in Bezug auf eine wischende Betätigung des berührungssensitiven Positionserfassungssensors 10 mittels einem Eingabeorgan, insbesondere mit einem Finger einer Bedienperson 8, ein Geschwindigkeits- und/oder Beschleunigungsprofil ermittelt wird, welches korrespondierenden Einfluss auf die Folge von Sollwerten 15 für die Antriebssteuerung 16 nimmt. Im Zusammenhang mit einer wischenden Betätigung kann dabei vorgesehen sein, dass ein Geschwindigkeits- und/oder Beschleunigungswert unmittelbar vor dem Abheben des Eingabeorgans gegenüber dem berührungssensitiven Positionserfassungssensor als fortlaufender Sollwert 15 für die Antriebssteuerung 16 verwendet wird, solange bis das Eingabeorgan, insbesondere ein Finger der Bedienperson 8, wieder auf dem berührungssensitiven Positionserfassungssensor 10 auftrifft. Insbesondere wird dadurch in Verbindung mit einer wischenden Betätigung eine Fortführung der initiierten Bewegung vorgenommen, bis das Eingabeorgan, insbesondere ein Finger, vom Positionserfassungssensor 10 wieder erkannt wird. Auch dadurch ist eine relativ komfortable und intuitive Maschinen- bzw. Anlagenbedienung, insbesondere in Bezug auf Bewegungsantriebe, ermöglicht.

Demgemäß kann vorgesehen sein, dass bei einer überstreichenden Betätigung mittels einem Eingabeorgan, insbesondere einem Finger einer Bedienperson 8 und einer damit korrespondierenden Veränderung der Sollwerte 15, die weitere Änderung der Sollwerte 15 ab dem Moment des Abhebens des Eingabeorgans von der Betätigungsfläche 13 fortgesetzt wird, insbesondere unverändert oder langsam abnehmend fortgesetzt wird, bis das Eingabeorgan erneut auf die Betätigungsfläche 13 aufgesetzt wird.

Wie weiters in Fig. 7 dargestellt wurde, ist entsprechend einer erfindungsgemäßen Ausführungsform vorgesehen sein, den berührungssensitiven Positionserfassungssensor 10 innerhalb seiner Betätigungsfläche 13, beispielsweise innerhalb des vordefinierten Bewegungsbereiches 36, in einen ersten Betätigungsabschnitt 43 und in wenigstens einen weiteren, insbesondere in einen zweiten Betätigungsabschnitt 44 zu unterteilen. Die entsprechende Teilungsebene, welche in Fig. 7 in strichlierten Linien dargestellt wurde, verläuft dabei bevorzugt in Längsrichtung des streifenförmigen Positionserfassungssensors 10 und unterteilt dessen Betätigungsfläche 13 in einen unteren bzw. ersten Betätigungsabschnitt 43 und in einen oberen bzw. zweiten Betätigungsabschnitt 44. Der zweite Betätigungsabschnitt 44 ist dabei zur Generierung von Sollwerten 15 für die Antriebssteuerung 16 ausgebildet, welche im Vergleich zu den über den ersten Betätigungsabschnitt 43 generierbaren Sollwerten 15 für die Antriebsteuerung 16 vergleichsweise höher bzw. feiner aufgelöst sind und eine vergleichsweise feinfühligere, manuelle Steuerung des Antriebes ermöglichen. Insbesondere kann bei Betätigungen im ersten Betätigungsabschnitt 43 eine vergleichsweise schnellere bzw. gröber aufgelöste Verstellbewegung eingeleitet werden, während bei einer Betätigung innerhalb des Betätigungsabschnittes 44 eine vergleichsweise langsamere bzw. feinfühligere Verstellbewegung eingeleitet wird, was beispielsweise im Nahbereich zu Endanschlägen bzw. Zielpositionen vorteilhaft sein kann. Der erste und zweite Betätigungsabschnitt 43, 44 kann beispielsweise durch eine auswertungstechnische Längsteilung des Positionserfassungssensors 10 definiert werden. Alternativ ist es auch möglich, dass der erste Betätigungsabschnitt 43 und der zumindest eine weitere Betätigungsabschnitt 44 durch baulich eigenständige Positionserfassungssensoren 10 gebildet sind.

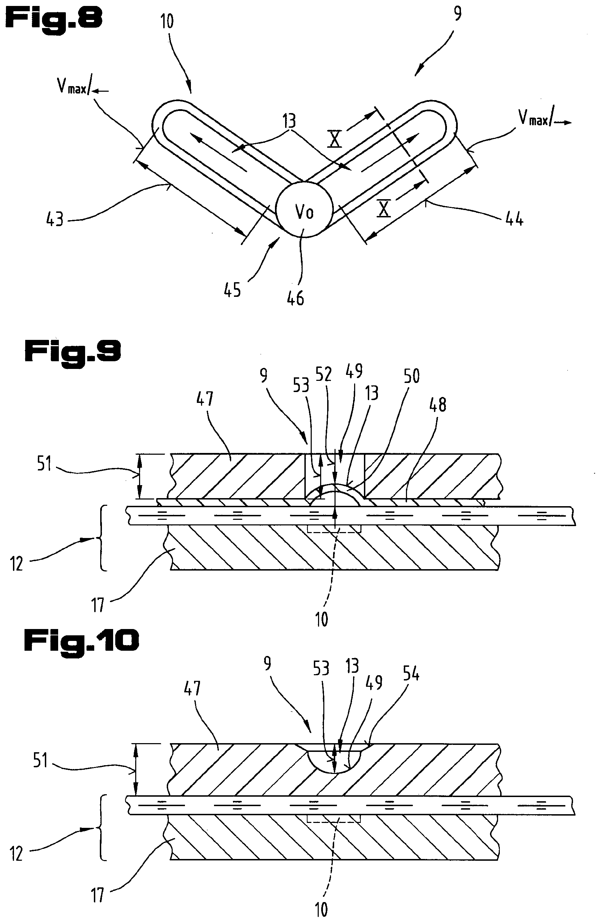

Fig. 8 zeigt eine weitere Ausführungsform eines im Wesentlichen streifenförmig ausgeführten, berührungssensitiven Positionserfassungssensors 10. Hierbei umfasst der berührungssensitive Positionserfassungssensor 10 einen ersten streifenförmigen Betätigungsabschnitt 43 und einen zweiten streifenförmigen Betätigungsabschnitt 44. Der zweite streifenförmige Betätigungsabschnitt 4 ist dabei gegenüber dem ersten streifenförmigen Betätigungsabschnitt 43 abgewinkelt ausgebildet bzw. verlaufen die beiden Betätigungsabschnitte 43, 44 mit zueinander unterschiedlicher Orientierung. Insbesondere ist dabei eine in Draufsicht im Wesentlichen V- oder U-förmige Betätigungsfläche 13 ausgebildet. Der erste Betätigungsabschnitt 43 kann dabei zur Einleitung von Bewegungen nach links vorgesehen sein, während der zweite, dazu abgewinkelt verlaufende Betätigungsabschnitt 44 zur Einleitung von Bewegungsrichtungen nach rechts vorgesehen ist. Selbstverständlich sind auch andere, zueinander entgegengesetzte Bewegungsrichtungen, beispielsweise nach unten oder nach oben bzw. nach vorne oder nach hinten denkbar.

Entsprechend einer zweckmäßigen Ausführung ist in einem Verbindungs- oder Übergangsabschnitt 45 zwischen dem ersten und zweiten Betätigungsabschnitt 43, 44 eine Neutral- oder Startzone 46 ausgebildet. Diese Neutral- oder Startzone 46 ist zum unmittelbaren Stillsetzen des angesteuerten, aktiven Antriebs der Maschine 2 oder Anlage 1 vorgesehen, sobald diese Neutral- oder Startzone 46 von der Bedienperson betätigt, insbesondere mit dem Finger berührt wird. Das heißt, dass der Sollwert 15 für die Geschwindigkeit des entsprechend angesteuerten Antriebs den Wert Null annimmt, sobald die Neutral- oder Startzone 46 aktiviert bzw. berührt wurde. Der linke bzw. erste Betätigungsabschnitt 43, das heißt der linke Ast des berührungssensitiven Positionserfassungssensors 10, initiiert zweckmäßigerweise Bewegungen nach links, während der rechte bzw. zweite Betätigungsabschnitt 44 Bewegungen nach rechts einleitet. Die jeweilige Position bzw. die entsprechende Distanz der Betätigung, insbesondere der Fingerposition ausgehend von der Neutral- oder Startzone 46 in Richtung zum jeweiligen Ende des ersten bzw. zweiten Betätigungsabschnittes 43, 44 entspricht einem Geschwindigkeitsfaktor bzw. einem Geschwindigkeitssollwert für den jeweiligen Antrieb. Insbesondere ist in den distalen Endabschnitten der Betätigungsabschnitte 43, 44 eine maximale Bewegungs- bzw. Fahrgeschwindigkeit nach links bzw. rechts wählbar. Das heißt, dass der Geschwindigkeitssollwert ausgehend von der Neutral- oder Startzone 46 mit einem Sollwert 15 von "Null" in Richtung zu den jeweiligen Endabschnitten der Betätigungsabschnitte 43, 44 zunimmt und schließlich am jeweiligen Ende den maximalen Geschwindigkeitswert bzw. Sollwert 15 definiert. Insbesondere kann durch Aufsetzen oder Verfahren des Fingers entlang des ersten bzw. zweiten Betätigungsabschnittes 43, 44 eine Steigerung und Reduzierung der Bewegungs- bzw. Fahrgeschwindigkeit nach links vorgenommen werden, indem auf den ersten Betätigungsabschnitt 43 eingegriffen wird. Demgegenüber kann eine Erhöhung oder Reduzierung der Verfahrgeschwindigkeit eingeleitet werden, wenn der zweite Betätigungsabschnitt 44 bedient wird. Die beiden Betätigungsabschnitte 43, 44 ermöglichen als eine proportionale bzw. quasi analoge Positions- oder Geschwindigkeitsveränderung für entsprechend angesteuerte Antriebe.

Zusätzlich oder alternativ zu einem Stopp der Antriebsbewegung bei Betätigung der zentralen Neutral- oder Startzone 46 kann dieses Ergebnis auch erzielt werden, indem ein Eingabeorgan, insbesondere ein Finger der Bedienperson, von der Betätigungsfläche 13 des berührungssensitiven Positionserfassungssensors 10 abgehoben wird.

In den Fig. 9, 10 ist eine vorteilhafte Weiterbildung veranschaulicht. Dabei ist der berührungssensitive Positionserfassungssensor 10 mittels einem Touch-Screen 12 umgesetzt und stellt somit ein virtuelles Eingabemittel 9 dar. Diesem virtuellen, insbesondere grafisch und berührungssensorisch ausgeführten Positionserfassungssensor 10 ist dabei eine plattenartige Blende 47 und/oder eine Folie 48 überlagert. Diese Blende 47 und/oder Folie 48 weist Vertiefungen 49 und/oder Erhebungen 50 zur erleichterten Positionsauffindung und/oder zur haptischen Führung des Fingers einer Bedienperson gegenüber dem berührungssensitiven Positionserfassungssensor 10 auf. Die Vertiefungen 49, welche zur Führung des Fingers dienen, können dabei durch Durchbrüche, Materialaussparungen oder Ausfräsungen in der transparenten oder durchscheinenden, plattenartigen Blende 47 gebildet sein. Für den Fall der Ausbildung einer Folie 48 mit wenigstens einer Erhebung 50 - Fig. 9 - kann diese Erhebung 50 auch ein taktiles Feedback in Bezug auf die Betätigung bzw. Berührung des Positionserfassungssensors 10 bieten. Insbesondere kann eine derartige Erhebung elastisch nachgiebig ausgeführt sein und somit eine Art "Knack-Effekt" erzielen, um der Bedienperson eine taktile und/oder akustische Rückmeldung in Bezug auf eine tatsächliche Bedienung bzw. Betätigung des berührungssensitiven Positionserfassungssensors 10 zu bieten.

Entsprechend einer zweckmäßigen Maßnahme ist vorgesehen, dass eine Dicke 51 der plattenartigen Blende 47, oder eine Höhe 52 der Erhebungen 50 der Folie 48 derart hoch bemessen, dass seitens des berührungssensitiven Positionserfassungssensors 10 keine Erkennung eines darauf abgestützten Fingers oder Handabschnittes einer Bedienperson 8 erfolgt. In diesem Zusammenhang ist dann eine Tiefe 53 der Vertiefungen 49 in der plattenartigen Blende 47, oder eine elastische Verformbarkeit der Erhebungen 50 der Folie 48 derart bemessen, dass bei einer Berührung oder Betätigung mit dem Finger einer Bedienperson 8 eine Erkennung durch den berührungssensitiven Positionserfassungssensor 10 bzw. durch das über dem Display 17 liegende Touch-Panel, insbesondere durch den Touch-Screen 12, zuverlässig gewährleistet ist. Dadurch werden ungewollte Bedienhandlungen vermieden und ist außerdem eine besonders sichere bzw. gefahrlose Anwendung in Verbindung mit Maschinensteuerungen erzielt.

Wie in Fig. 10 schematisch dargestellt wurde, kann im Übergangsabschnitt zwischen der Oberseite bzw. der äußeren Flachseite der transparenten oder durchscheinenden Blende 47 und der Vertiefung 49 eine zumindest partiell umlaufende, bevorzugt eine vollständig umlaufende Fase 54 ausgebildet sein. Eine derartige Fase 54 erleichtert das quasi blinde Auffinden der Führungs-Vertiefungen 49 für den Finger einer Bedienperson 8. Außerdem wird dadurch die Ergonomie verbessert und die Gefahr von Verletzungen minimiert. Anstelle einer Fase 54 ist es auch möglich, einen abgerundeten Übergang im Übergangsbereich zwischen der Vertiefung 49 in Richtung zur Oberseite der Blende 47 vorzusehen. Wesentlich ist, dass die Blende 47, eine gegebenenfalls eingesetzte Folie 48 und die berührungssensitive Decklage des Displays 17, insbesondere das Touch-Panel, transparent oder durchscheinend sind, sodass die auf dem Display 17 dargestellten Grafiken, beispielsweise Statusbalken, Icons, Wertefelder oder dgl., für die Bedienperson 8 visuell wahrgenommen werden können.

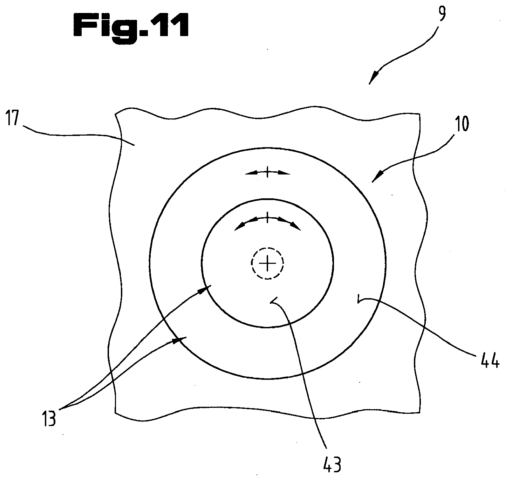

In Fig. 11 ist eine weitere Ausführungsform eines berührungssensitiven Positionserfassungssensors 10, wie er in Verbindung mit den Fig. 7-10 bereits erläutert wurde, veranschaulicht. Für vorhergehend bereits beschriebene Teile werden daher gleiche Bezugszeichen verwendet und sind die vorhergehenden Beschreibungsteile sinngemäß auf gleiche Teile mit gleichen Bezugszeichen übertragbar.

Hierbei ist die berührungssensitive Betätigungsfläche 13 des Positionserfassungssensors 10 kreisförmig bzw. ringförmig ausgeführt, sodass wenigstens eine quasi endlose bzw. in sich geschlossene Betätigungsfläche 13 ausgebildet ist. Dabei kann durch Kreisbewegungen mit einem Eingabeorgan, insbesondere mit einem Finger der Bedienperson eine quasi endlose Bewegungsvorgabe ausgeführt werden, sodass ein Nachsetzen des Eingabeorgans erübrigt ist. Dadurch wird der Bedienkomfort verbessert und das Handling vereinfacht.

Auch hierbei kann durch eine Bedienervorgabe in Bezug auf die Geschwindigkeit und/oder der Richtung der wischenden bzw. überstreichenden Betätigung eine korrelierende Vorgabe von Steuerbefehlen bzw. eine korrespondierende Generierung von Sollwerten 15 für die Antriebssteuerung 16 einer Maschine 2 oder Anlage 1 - Fig. 1 - erzielt werden.

Weiters kann vorgesehen sein, die Betätigungsfläche 13 durch konzentrische, kreis- oder ringförmige Betätigungsabschnitte 43, 44 zu bilden. Die Umrisskonturen der Betätigungsabschnitte 43, 44 müssen dabei nicht exakt kreisrund ausgeführt sein, sondern können auch eine polygone Umrissform besitzen. Entsprechend einer zweckmäßigen Maßnahme ist dabei vorgesehen, dass im Außenbereich bzw. am Außenumfang der Betätigungsfläche 13, insbesondere anhand des äußeren Betätigungsabschnittes 44, eine Feinpositionierung von Antrieben bzw. Maschinenachsen vorgesehen ist. Demgegenüber ist im Innen- oder Zentrumsbereich bzw. am Innenumfang der berührungssensitiven Betätigungsfläche 13, insbesondere mittels dem inneren Betätigungsabschnitt 43, eine Grobpositionierung von Maschinenachsen bzw. eine vergleichsweise raschere Verstellbewegung für einen angesteuerten Antrieb ermöglicht.

Die Ausführungsbeispiele zeigen mögliche Ausführungsvarianten des erfindungsgemäßen Verfahrens bzw. der entsprechenden Maschinensteuerung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Die entsprechenden Konturen bzw. Betätigungsabschnitte 43, 44 können wiederum grafisch hervorgehoben, insbesondere durch permanente Aufdrucke an der berührungssensitiven Betätigungsfläche 13 und/oder durch Visualisierungen mittels dem Display 17 flexibel gekennzeichnet werden und somit für eine Bedienperson in einfacher Art und Weise ersichtlich bzw. unterscheidbar gemacht werden.

Der Ordnung halber sei abschließend darauf hingewiesen, dass zum besseren Verständnis des Aufbaus der Maschinensteuerung diese bzw. deren Bestandteile teilweise unmaßstäblich und/oder vergrößert und/oder verkleinert dargestellt wurden. Entsprechendes gilt für den berührungssensitiven Positionserfassungssensor.

Die den eigenständigen erfinderischen Lösungen zugrundeliegende Aufgabe kann der Beschreibung entnommen werden.

Vor allem können die einzelnen in den Fig. 1 bis 11 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

## Patentansprüche

1. Verfahren zur manuell gesteuerten Beeinflussung von Bewegungen einer elektronisch gesteuerten Maschine (2) oder Anlage (1), umfassend:
eine manuelle Bedienung eines proportional oder quasi analog steuernden Eingabemittels (9, 9'),
eine Generierung einer zeitlichen Folge von quasi-analogen Sollwerten (15), insbesondere von Positionswerten, Geschwindigkeitswerten oder Beschleunigungswerten, für eine Steuerungseinrichtung (3) oder für eine Antriebssteuerung (16) von zumindest einem Antrieb der elektronisch gesteuerten Maschine (2) oder Anlage (1), welche zeitliche Folge von quasi-analogen Sollwerten (15) auf den Vorgaben oder Eingaben einer Bedienperson gegenüber dem quasi analog steuernden Eingabemittel (9, 9') basiert,
wobei als Eingabemittel (9) ein zumindest eindimensional auflösender, berührungssensitiver Positionserfassungssensor (10), insbesondere in Art eines Touchpads (11) oder Touch-Screens (12, 12'), eingesetzt wird, welcher zur fortlaufenden Erfassung einer überstreichenden Betätigungsbewegung oder von zumindest einer einzelnen Betätigungsposition innerhalb einer elektronisch auswertbaren Betätigungsfläche (13) des berührungssensitiven Positionserfassungssensors (10) verwendet wird,
und wobei unter Einbindung des berührungssensitiven Positionserfassungssensors (10) eine zeitliche Folge von Vorgabe- oder Positionswerten (14) in Bezug zu dessen Betätigungsfläche (13) ermittelt und in eine korrespondierende zeitliche Folge von Sollwerten (15) für die Antriebssteuerung (16) umgewandelt wird,
**dadurch gekennzeichnet, dass**
dem berührungssensitiven Positionserfassungssensor (10) eine plattenartige Blende (47) und/oder eine Folie (48) überlagert ist, welche Blende (47) Vertiefungen (49) und/oder welche Folie (48) Erhebungen (50) aufweist, die zur erleichterten Positionsauffindung oder haptischen Führung des Fingers einer Bedienperson gegenüber dem berührungssensitiven Positionserfassungssensor (10) eingesetzt werden, und dass eine Freischaltung vor der Aktivierung des zu steuernden Antriebes und/oder eine Freigabe zur Veränderung der Sollwerte (15) für die Antriebssteuerung (16) und/oder eine wirkungsmäßige Freischaltung des berührungssensitiven Positionserfassungssensors (10) erst nach Ausführung einer vordefinierten, charakteristischen Bedienhandlung, insbesondere durch doppeltes oder mehrfaches Antippen oder Berühren des berührungsempfindlichen Positionserfassungssensors (10) innerhalb einer vorbestimmten Zeitspanne, oder erst nach Ausführung eines vorbestimmten Bewegungsmusters am berührungssensitiven Positionserfassungssensor (10) erfolgt.

2. Verfahren nach Anspruch 1, **dadurch gekennzeichnet, dass** im Zuge der Umwandlung der zeitlichen Folge von Vorgabe- oder Positionswerten (14) in die zeitliche Folge von Sollwerten (15) für die Antriebssteuerung (16) eine Glättung über mehrere nacheinander ermittelte Vorgabe- oder Positionswerte (14) vorgenommen wird, oder eine Glättung über mehrere unmittelbar aufeinander folgende Sollwerte (15) vorgenommen wird.

3. Verfahren nach Anspruch 1 oder 2, **dadurch gekennzeichnet, dass** die einzelnen Werte der Folge von Vorgabe- oder Positionswerten (14) des berührungssensitiven Positionssensors (10) in einem zeitlichen Abstand ermittelt werden, welcher im Vergleich zu einem zeitlichen Abstand der Sollwerte (15) für die Antriebssteuerung (16) unterschiedlich ist.

4. Verfahren nach Anspruch 3, **dadurch gekennzeichnet, dass** die Vorgabe- oder Positionswerte (14) des berührungssensitiven Positionserfassungssensors (10) in zeitlich variierenden Abständen ermittelt werden und die Sollwerte (15) für die Antriebssteuerung (16) für einen vorbestimmten, zeitlich konstanten Abstand ermittelt werden.

5. Verfahren nach Anspruch 3 oder 4, **dadurch gekennzeichnet, dass** die Sollwerte (15) für die Antriebssteuerung (16) in einem streng periodischen Zeitraster bestimmt werden und durch Interpolation oder Extrapolation der erfassten Vorgabe- oder Positionswerte (14) des berührungssensitiven Positionserfassungssensors (10) ermittelt werden.

6. Verfahren nach einem der Ansprüche 3 bis 5, **dadurch gekennzeichnet, dass** während einer Verfahrbewegung einer Maschinenachse oder eines Antriebes der angesteuerten Maschine (2) oder Anlage (1) eine fortlaufende Abfrage zur Erfassung von Vorgabe- oder Positionswerten (14) des berührungssensitiven Positionssensors (10) überwacht wird und beim Ausbleiben der Abfrage oder von Abfrageergebnissen über einen festgelegten Zeitraum hinaus, von der Steuerungseinrichtung (3) und/oder der Antriebssteuerung (16) ein Abbruch der Verfahrbewegung veranlasst oder eingeleitet wird.

7. Verfahren nach einem der vorhergehenden Ansprüche, **dadurch gekennzeichnet, dass** die Veränderung der Sollwerte (15) für die Antriebssteuerung (16) im Zuge der Betätigung des berührungssensitiven Positionserfassungssensors (10) innerhalb einer bestimmten Zeitspanne im Wesentlichen proportional zu dem während dieser Zeitspanne überstrichenen Weg auf der Betätigungsfläche (13) des berührungssensitiven Positionserfassungssensors (10) ist.

8. Verfahren nach einem der vorhergehenden Ansprüche, **dadurch gekennzeichnet, dass** die Veränderung der Sollwerte (15) für die Antriebssteuerung (16) innerhalb einer bestimmten Zeitspanne im Wesentlichen proportional zu der in dieser Zeitspanne festgestellten Distanz einer aktuellen Betätigungsposition im Vergleich zu einem die überstreichende Betätigungsbewegung einleitenden, initialen Berührungspunkt auf der Betätigungsfläche (13) des berührungssensitiven Positionserfassungssensors (10) ist, wobei zusätzlich zur festgestellten Distanz gegebenenfalls auch die Richtung oder Orientierung der aktuellen Betätigungsposition im Vergleich zum unmittelbar vorhergegangenen, initialen Berührungspunkt, insbesondere in Bezug auf eine Koordinatenachse, ermittelt wird und für die Veränderung der Sollwerte (15) für die Antriebssteuerung (16) mitbestimmend ist.

9. Verfahren nach einem der vorhergehenden Ansprüche, **dadurch gekennzeichnet, dass** die Sollwerte (15) für die Antriebssteuerung (16) in Abhängigkeit einer Veränderung der Betätigungsposition entlang einer bestimmten Richtung oder Dimension, insbesondere in Bezug auf eine bestimmte Koordinatenachse, ermittelt und festgelegt werden.

10. Verfahren nach einem der vorhergehenden Ansprüche, **dadurch gekennzeichnet, dass** die maximal zugelassene Veränderung (25) der Sollwerte (15) für die Antriebssteuerung (16) in Bezug auf einen bestimmten Zeitabstand (26) durch einen oberen Grenzwert begrenzt wird, wobei die maximal zugelassene Veränderung (25) der Sollwerte (15) von der maximal zulässigen Bewegungsgeschwindigkeit, von der maximal möglichen Bewegungsgeschwindigkeit, oder von der von einer Bedienperson noch erwartungsgemäß sicher überschau- und kontrollierbaren Bewegungsgeschwindigkeit des angesteuerten Antriebes abhängig gemacht wird.

11. Verfahren nach Anspruch 10, **dadurch gekennzeichnet, dass** der obere Grenzwert variabel angepasst wird, wobei diese Anpassung des oberen Grenzwertes vom Betriebszustand der Maschine (2) oder Anlage (1) und/oder von der aktuellen Position des angesteuerten Antriebes oder einer angesteuerten Maschinenachse abhängig gemacht wird.

12. Verfahren nach einem der vorhergehenden Ansprüche, **dadurch gekennzeichnet, dass** aus der Bewegungsvorgabe durch den berührungssensitiven Positionserfassungssensor (10) und/oder aus sensorisch erfassten Messwerten der von der Maschine (2) oder Anlage (1) ausgeführten Bewegung oder Ablaufveränderung und/oder aus den von der Steuerungseinrichtung (3) oder der Antriebssteuerung (16) generierten Steuerbefehlen eine Kenngröße ermittelt und mit einem oberen Grenzwert verglichen wird, und dass bei einem Überschreiten des oberen Grenzwertes die Bewegung oder Ablaufveränderung der Maschine (2) oder Anlage (1) umgehend oder nach einer definiert begrenzten Nachlaufphase gestoppt wird, und/oder dass bei definierter Annäherung der Kenngröße an den oberen Grenzwert oder bei einem Überschreiten eines unteren Grenzwertes, welcher niedriger als der obere Grenzwert ist, der Bedienperson die Nähe oder Annäherung zum oberen Grenzwert durch Abgabe eines Warnsignals signalisiert wird.

13. Verfahren nach einem der vorhergehenden Ansprüche, **dadurch gekennzeichnet, dass** ein Nahbereich (40) um eine festgelegte Null- oder Startposition (39) des berührungssensitiven Positionserfassungssensors (10) vordefiniert ist und eine Veränderung der Sollwerte (15) für die Antriebssteuerung (16) oder eine Freigabe des zu bedienenden Antriebes erst dann erfolgt, wenn ein Eingabeorgan, insbesondere ein Finger der Bedienperson, über eine bestimmte Distanz oder über den vordefinierten Nahbereich (40) hinausbewegt wird.

14. Verfahren nach einem der vorhergehenden Ansprüche, **dadurch gekennzeichnet, dass** in wenigstens einem Rand- oder Endabschnitt des berührungssensitiven Positionserfassungssensors (10) eine Endzone (41, 42) definiert ist, und dass bei einer unterbrechungsfrei überstreichenden Betätigungsbewegung mittels einem Eingabeorgan, insbesondere einem Finger einer Bedienperson, ausgehend von einem zentralen oder inneren Bewegungsbereich (36) in eine der Endzonen (41, 42), die Änderung der Sollwerte (15) ab dem Moment des Übertritts in die jeweilige Endzone (41, 42) unabhängig von der weiteren Veränderung der Betätigungsposition fortgesetzt, insbesondere konstant beibehalten wird, bis das Eingabeorgan die Endzone (41, 42) wieder verlässt, insbesondere von der Endzone (41, 42) abgehoben wird.

15. Verfahren nach einem der Ansprüche 1 bis 134, **dadurch gekennzeichnet, dass** bei einer überstreichenden Betätigung mittels einem Eingabeorgan, insbesondere einem Finger einer Bedienperson und einer damit korrespondierenden Veränderung der Sollwerte (15), die weitere Änderung der Sollwerte (15) ab dem Moment des Abhebens des Eingabeorgans von der Betätigungsfläche (13) fortgesetzt wird, insbesondere unverändert oder langsam abnehmend fortgesetzt wird, bis das Eingabeorgan erneut auf die Betätigungsfläche (13) aufgesetzt wird.

16. Maschinensteuerung mit einem Bedienpanel (5), welches zumindest zur manuell gesteuerten Beeinflussung von Bewegungen einer elektronisch gesteuerten Maschine (2) oder Anlage (1) ausgebildet ist,
mit einem proportional oder quasi analog steuernden Eingabemittel (9,9'), welches manuell betätigbar ist,
wobei die Maschinensteuerung oder eine von der Maschinensteuerung umfasste Antriebssteuerung (16) zur Generierung einer zeitlichen Folge von quasi-analogen Sollwerten (15), insbesondere von Positionswerten, Geschwindigkeitswerten oder Beschleunigungswerten für zumindest einen Antrieb der elektronisch gesteuerten Maschine (2) oder Anlage (1) ausgebildet ist und diese zeitliche Folge von quasi-analogen Sollwerten (15) auf den Vorgaben oder Eingaben einer Bedienperson gegenüber dem quasi analog steuernden Eingabemittel (9, 9') basiert,
wobei als Eingabemittel (9) ein zumindest eindimensional auflösender, berührungssensitiver Positionserfassungssensor (10), insbesondere in Art eines Touchpads (11) oder Touch-Screens (12, 12'), ausgebildet ist, welcher zur fortlaufenden Erfassung einer überstreichenden Betätigungsbewegung oder von zumindest einer einzelnen Betätigungsposition innerhalb einer elektronisch auswertbaren Betätigungsfläche (13) des berührungssensitiven Positionserfassungssensors (10) vorgesehen ist,
und wobei die Maschinensteuerung oder Antriebssteuerung (16) unter Einbindung des berührungssensitiven Positionserfassungssensors (10) eine zeitliche Folge von Vorgabe- oder Positionswerten (14) in Bezug auf Betätigungen gegenüber der Betätigungsfläche (13) ermittelt und zur Umwandlung dieser zeitlichen Folge von Vorgabe- oder Positionswerten (14) in eine korrespondierende zeitliche Folge von Sollwerten (15) für die Maschinensteuerung oder die Antriebssteuerung (16) ausgebildet ist,
**dadurch gekennzeichnet, dass**
dem berührungssensitiven Positionserfassungssensor (10) eine plattenartige Blende (47) und/oder eine Folie (48) überlagert ist, welche Blende (47) Vertiefungen (49) und/oder welche Folie (48) Erhebungen (50) zur erleichterten Positionsauffindung oder haptischen Führung des Fingers einer Bedienperson gegenüber dem berührungssensitiven Positionserfassungssensor (10) aufweist, wobei
der berührungssensitive Positionserfassungssensor (10) innerhalb seiner Betätigungsfläche (13) einen ersten und zumindest einen zweiten Betätigungsabschnitt (43, 44) aufweist, wobei der zweite Betätigungsabschnitt (44) zur Generierung von Sollwerten (15) für die Antriebssteuerung (16) ausgebildet ist, welche im Vergleich zu den über den ersten Betätigungsabschnitt (43) generierbaren Sollwerten (15) für die Antriebssteuerung (16) vergleichsweise höher oder feiner aufgelöst sind und eine vergleichsweise feinfühligere, manuelle Steuerung des Antriebes ermöglichen.

17. Maschinensteuerung nach Anspruch 16, **dadurch gekennzeichnet, dass** der erste Betätigungsabschnitt (43) und der zumindest eine weitere Betätigungsabschnitt (44) durch baulich eigenständige Positionserfassungssensoren (10) gebildet sind.

18. Maschinensteuerung nach einem der Ansprüche 16 bis 17, **dadurch gekennzeichnet, dass** der berührungssensitive Positionserfassungssensor (10) Multi-Touch-fähig ist und zur simultanen Erfassung mehrerer, zueinander distanzierter Betätigungspunkte ausgebildet ist.

19. Maschinensteuerung nach einem der Ansprüche 16 bis 18, **dadurch gekennzeichnet, dass** der berührungssensitive Positionserfassungssensor (10) einen ersten streifenförmigen Betätigungsabschnitt (43) und einen zweiten streifenförmigen Betätigungsabschnitt (44) umfasst, wobei der zweite streifenförmige Betätigungsabschnitt (44) gegenüber dem ersten streifenförmigen Betätigungsabschnitt (43) abgewinkelt ausgerichtet ist oder mit anderer Orientierung verläuft, sodass eine in Draufsicht im Wesentlichen V- oder U-förmige Betätigungsfläche (13) gebildet ist.

20. Maschinensteuerung nach Anspruch 19, **dadurch gekennzeichnet, dass** in einem Verbindungs- oder Übergangsabschnitt (45) zwischen dem ersten streifenförmigen Betätigungsabschnitt (43) und dem zweiten streifenförmigen Betätigungsabschnitt (44) eine Neutral- oder Startzone (46) ausgebildet ist, welche bei Betätigung zum Stillsetzen des angesteuerten, aktiven Antriebs der Maschine (2) oder Anlage (1) vorgesehen ist.

21. Maschinensteuerung nach Anspruch 20, **dadurch gekennzeichnet, dass** eine Dicke (51) der plattenartigen Blende (47) oder eine Höhe (52) der Erhebungen (50) der Folie (48) derart hoch bemessen ist, dass seitens des berührungssensitiven Positionserfassungssensors (10) keine Erkennung eines darauf abgestützten Fingers oder Handabschnittes einer Bedienperson erfolgt, und dass eine Tiefe (53) der Vertiefungen (49) in der plattenartigen Blende (47), oder eine elastische Verformbarkeit der Erhebungen (50) der Folie (48) derart bemessen ist, dass bei einer Berührung oder Betätigung mit dem Finger einer Bedienperson eine Erkennung durch den berührungssensitiven Positionserfassungssensor (10) gewährleistet ist.

## Claims

1. A method for influencing movements of an electronically controlled machine (2) or system (1) in a manually controlled manner, comprising:
manual operation of a proportional or quasi-analogue controlling input means (9, 9'),
generating a temporal sequence of quasi-analogue target values (15), particularly positional values, speed values or acceleration values for a control device (3) or for a drive controller (16) of at least one drive of the electronically controlled machine (2) or system (1), which temporal sequence of quasi-analogue target values (15) is based on the instructions or entries made by an operator with respect to the quasi-analogue controlling input means (9, 9 '),
wherein an at least one-dimensionally resolving, touch-sensitive position detection sensor (10), particularly of a touchpad (11) or touchscreen (12, 12') type, serves as the input means (9) which is used for the continuous detection of a sweeping actuation movement or of at least a single actuation position within an actuation surface (13) of the touch-sensitive position detection sensor (10) that can be evaluated electronically,
and wherein a temporal sequence of specified or positional values (14) is determined with the aid of the touch-sensitive position detection sensor (10) relative to the actuation surface (13) thereof and converted into a corresponding temporal sequence of target values (15) for the drive controller (16),
**characterized in that**
a plate-like screen (47) and/or film (48) is superimposed on the touch-sensitive position detection sensor (10), which screen (47) has recesses (49) and/or which film (48) has elevations (50) that serve to facilitate positioning or haptic guidance of an operator's fingers with respect to the touch-sensitive position detection sensor (10), and that an enabling prior to activation of the drive to be controlled and/or release to change the target values (15) for the drive controller (16) and/or a functional enabling of the touch-sensitive position detection sensor (10) takes place only after completion of a predefined characteristic operating action, in particular by double or multiple tapping or touching of the touch-sensitive position detection sensor (10) within a predetermined time, or only after completion of a predetermined movement pattern on the touch-sensitive position detection sensor (10).

2. The method according to claim 1, **characterized in that** in the course of the conversion of the temporal sequence of specified or positional values (14) into the temporal sequence of target values (15) for the drive controller (16), a smoothing over multiple successively determined specified or positional values (14) is carried out, or a smoothing over multiple immediately consecutive target values (15) is carried out.

3. The method according to claim 1 or 2, **characterized in that** the individual values of the sequence of specified or positional values (14) of the touch-sensitive position sensor (10) are determined in a time interval which is different compared to a time interval of the target values (15) for the drive controller (16).

4. The method according to claim 3, **characterized in that** the specified or positional values (14) of the touch-sensitive position detection sensor (10) are determined at temporally variable intervals, and the target values (15) for the drive controller (16) are determined for a predetermined, temporally constant interval.

5. The method according to claim 3 or 4, **characterized in that** the target values (15) for the drive controller (16) are determined in a strictly periodic time grid and by interpolation or extrapolation of the detected specified or positional values (14) of the touch-sensitive position detection sensor (10).

6. The method according to one of claims 3 to 5, **characterized in that** a continuous poll is monitored during a traveling motion of a machine axis or a drive of the controlled machine (2) or system (1) for detecting specified or positional values (14) of the touch-sensitive position sensor (10), and if the poll or the results of the poll is/are absent for longer than a defined period of time, a discontinuation of the traveling motion is caused or initiated by the control device (3) and/or the drive controller (16).

7. The method according to one of the preceding claims, **characterized in that** the variation of the target values (15) for the drive controller (16) during actuation of the touch-sensitive position detection sensor (10) within a certain timeframe is essentially proportional to the path on the actuation surface (13) of the touch-sensitive position detecting sensor (10) that is swept over during said timeframe.

8. The method according to one of the preceding claims, **characterized in that** the variation of the target values (15) for the drive controller (16) within a certain timeframe is essentially proportional to the distance detected in this timeframe of a current actuation position compared to an initial contact point on the actuation surface (13) of the touch-sensitive position detection sensor (10) that initiates the sweeping actuation movement, wherein the direction or orientation of the current actuation position compared to the immediately preceding initial contact point is optionally also determined, in particular with respect to a coordinate axis, and co-determines the change of the target values (15) for the drive controller (16).

9. The method according to one of the preceding claims, **characterized in that** the target values (15) for the drive controller (16) are determined and defined depending on a change in the actuation position along a specific direction or dimension, particularly relative to a specific coordinate axis.

10. The method according to one of the preceding claims, **characterized in that** the maximum permitted variation (25) of target values (15) for the drive controller (16) with respect to a given time interval (26) is limited by an upper threshold value, wherein the maximum permitted variation (25) of target values (15) is predicated on the maximum permissible movement speed, the maximum possible movement speed, or the movement speed of the actuated drive that an operator can be expected to manage and control safely.

11. The method according to claim 10, **characterized in that** the upper threshold value is adjusted variably, wherein said adjustment of the upper threshold value is predicated on the operating state of the machine (2) or system (1) and/or on the current position of the controlled drive or of a controlled machine axis.

12. The method according to one of the preceding claims, **characterized in that** a characteristic value is calculated from the movement instruction by the touch-sensitive position detection sensor (10) and/or from sensor-detected measurement values of the movement or sequence change performed by the machine (2) or system (1) and/or from the control commands generated by the control device (3) or drive controller (16), which characteristic value is compared with an upper threshold value, and that when the upper threshold value is exceeded, the movement or sequence change of the machine (2) or system (1) is stopped immediately or after a defined, limited stopping time, and/or that the operator is alerted to the fact that the upper threshold value is close or being approached by the emission of a warning signal when the characteristic value approaches the upper threshold value in a defined manner or exceeds a lower threshold value, which is lower than the upper threshold value.

13. The method according to one of the preceding claims, **characterized in that** a vicinity (40) is predefined around a determined zero point or start position (39) of the touch-sensitive position detection sensor (10), and the target values (15) for the drive controller (16) are changed or the drive to be operated is enabled only once an input instrument, particularly a finger of the operator, is moved beyond a specified distance or over the predefined vicinity (40).

14. The method according to one of the preceding claims, **characterized in that** an end zone (41, 42) is defined in at least one edge or end portion of the touch-sensitive position detection sensor (10), and that when an uninterrupted sweeping actuation movement is made by an input instrument, particularly a finger of the operator, starting from a central or inner movement region (36) into one of the end zones (41, 42), the change of the target values (15) is resumed from the moment the instrument moves into the respective end zone (41, 42), regardless of any further change in the actuation position, in particular is kept constant until the input instrument leaves the end zone (41, 42), in particular is lifted off of the end zone (41, 42).

15. The method according to any one of claims 1 to 13, **characterized in that** in a sweeping actuation by means of an input instrument, particularly an operator's finger, and a change in the target values (15) corresponding thereto, the further change of the target values (15) is resumed from the moment the operator's finger is lifted off the actuation surface (13), in particular is continued unchanged or decreasing slowly until the input instrument is placed on the actuation surface (13) again.

16. A machine control with an operating panel (5) that is designed at least for manually controlled influencing of movements of an electronically controlled machine (2) or system (1),
having an input means (9, 9') for proportional or quasi-analogue control which is manually operable,
wherein the machine control or a drive controller (16) comprised by the machine control is designed to generate a temporal sequence of quasi-analogue target values (15), particularly positional values, speed values or acceleration values for at least one drive of the electronically controlled machine (2) or system (1), and this temporal sequence of quasi-analogue target values (15) is based on the instructions or entries made by an operator with respect to the quasi-analogue controlling input means (9, 9 '),
wherein an at least one-dimensionally resolving, touch-sensitive position detection sensor (10), particularly of a touchpad (11) or touchscreen (12, 12') type, is formed as the input means (9), which position detection sensor (10) is provided for the continuous detection of a sweeping actuation movement or of at least a single actuation position within an actuation surface (13) of the touch-sensitive position detection sensor (10) that can be evaluated electronically,
and wherein the machine control or drive controller (16) determines a temporal sequence of specified or positional values (14) relative to actuations on the actuation surface (13) with the aid of the touch-sensitive position detection sensor (10), and is designed to convert said temporal sequence of specified or positional values (14) into a corresponding temporal sequence of target values (15) for the machine control or drive controller (16),
**characterized in that**
a plate-like screen (47) and/or film (48) is superimposed on the touch-sensitive position detection sensor (10), which screen (47) has recesses (49) and/or which film (48) has elevations (50) that serve to facilitate positioning or haptic guidance of the finger of an operator with respect to the touch-sensitive position detection sensor (10), wherein the touch-sensitive position detection sensor (10) comprises a first and at least one second actuation section (43, 44) within its actuation area (13), wherein the second actuation section (44) is designed to generate target values (15) for the drive controller (16), which have a higher or finer degree of resolution than the target values (15) which are generated for the drive controller (16) by the first actuation area (43), and thus enable comparatively more sensitive, manual control of the drive.

17. The machine control according to claim 16, **characterized in that** the first actuation section (43) and the at least one further actuation section (44) are made up of structurally independent position detection sensors (10).

18. The machine control according to one of claims 16 to 17, **characterized in that** the touch-sensitive position-detection sensor (10) is multi-touch-capable and is designed for the simultaneous detection of multiple mutually distanced actuation points.

19. The machine control according to one of claims 16 to 18, **characterized in that** the touch-sensitive position-detection sensor (10) comprises a first strip-like actuation section (43) and a second strip-like actuation section (44), wherein the second strip-like actuation section (44) is oriented at an angle relative to the first strip-like actuation section (43) or extends in a different orientation, so that, in plan view, an essentially V-shaped or U-shaped actuation surface (13) is formed.

20. The machine control according to claim 19, **characterized in that** a neutral or start zone (46) is formed in a connecting or transition section (45) between the first strip-like actuation section (43) and the second strip-like actuation section (44), which neutral or start zone (46) is provided so that when it is actuated, the controlled, active drive of the machine (2) or system (1) is stopped.

21. The machine control according to claim 20, **characterized in that** a thickness (51) of the plate-like screen (47) or a height (52) of the elevations (50) of the film (48) is dimensioned to be of such a height that the touch-sensitive position-detection sensor (10) does not detect the finger or part of a hand of the operator resting upon it, and that a depth (53) of the recesses (49) in the plate-like screen (47) or an elastic deformability of the elevations (50) of the film (48) is dimensioned such that a touch or actuation by the finger of an operator is certain to be detected by the touch-sensitive position-detection sensor (10).

## Revendications

1. Procédé de contrôle manuel des mouvements d'une machine (2) ou d'une installation (1) contrôlée électroniquement, comprenant :
une commande manuelle d'un moyen de saisie (9, 9') à contrôle proportionnel ou quasi-analogique,
une génération d'une séquence temporelle de valeurs de consigne quasi-analogiques (15), plus particulièrement de valeurs de position, de valeurs de vitesse ou de valeurs d'accélération, pour un dispositif de commande (3) ou pour un dispositif d'entraînement (16) d'au moins un entraînement de la machine (1) ou de l'installation (2) contrôlée électroniquement, cette séquence temporelle de valeur de consigne quasi-analogiques (15) étant basée sur les directives ou les saisies d'un opérateur par rapport au moyen de saisie (9, 9') à commande quasi-analogique,
dans lequel, en tant que moyen de saisie (9), un capteur de détection de position (10) à résolution au moins unidimensionnelle, sensible au contact, plus particulièrement à la manière d'une tablette tactile (11) ou d'un écran tactile (12, 12'), est utilisé, qui est utilisé pour la détection en continu d'un mouvement d'actionnement ou d'au moins une position d'actionnement individuelle à l'intérieur d'une surface d'actionnement (13), pouvant être analysée électroniquement, du capteur de détection de position (10) sensible au contact,
et dans lequel, en intégrant le capteur de détection de position (10) sensible au contact, une séquence temporelle de valeurs de référence ou de position (14) par rapport à sa surface d'actionnement (13) est déterminée et convertie en une séquence temporelle correspondante de valeurs de consigne (15) pour la commande d'entraînement (16),
**caractérisé en ce que**
un masque (47) en forme de plaque et/ou un film (48) est superposé au capteur de détection de position (10) sensible au contact, ce masque (47) comprenant des creux (49) et/ou ce film (48) comprenant des bossages (50) qui sont utilisés pour faciliter la détermination de la position ou
le guidage haptique du doigt d'un opérateur par rapport au capteur de détection de position (10) sensible au contact, et **en ce qu'**une validation avant l'activation de l'entraînement à contrôler et/ou une validation de la modification des valeurs de consigne (15) pour la commande d'entraînement (16) et/ou une validation fonctionnelle du capteur de détection de position (10) sensible au contact n'a lieu qu'après la réalisation d'une manipulation de commande prédéfinie caractéristique, plus particulièrement par tapotage ou contact double ou multiple du capteur de détection de position (10) sensible au contact à l'intérieur d'une période prédéterminée ou qu'après la réalisation d'un modèle de mouvement prédéterminé au niveau du capteur de détection de position (10) sensible au contact.

2. Procédé selon la revendication 1, **caractérisé en ce que**, au cours de la conversion de la séquence temporelle de valeurs de référence ou de position (14) en une séquence temporelle de valeurs de consigne (15) pour la commande d'entraînement (16), un lissage sur plusieurs valeurs de référence ou de position (14) est effectué ou un lissage sur plusieurs valeurs de consigne (15) se succédant directement est effectué.

3. Procédé selon la revendication 1 ou 2, **caractérisé en ce que** les différentes valeurs de la séquence de valeurs de référence ou de position (14) du capteur de position (10) sensible au contact sont déterminées à un intervalle temporel qui est différent par rapport à un intervalle temporel des valeurs de consigne (15) pour la commande d'entraînement (16).

4. Procédé selon la revendication 3, **caractérisé en ce que** les valeurs de référence et de position (14) du capteur de détection de position (10) sensible au contact sont déterminés à des intervalles temporels variables et les valeurs de consigne (15) pour la commande d'entraînement (16) sont déterminées pour une distance prédéterminée, temporellement constante.

5. Procédé selon la revendication 3 ou 4, **caractérisé en ce que** les valeurs de consigne (15) pour la commande d'entraînement (16) sont déterminées dans une trame temporelle strictement périodique et sont déterminées par interpolation ou extrapolation des valeurs de référence ou de position (14) du capteur de détection de position (10) sensible au contact.

6. Procédé selon l'une des revendications 3 à 5, **caractérisé en ce que**, pendant un mouvement de déplacement d'un axe de machine ou d'un entraînement de la machine (2) ou de l'installation (1) contrôlée, une interrogation en continu est surveillée pour la mesure de valeurs de référence ou de position (14) du capteur de position (10) sensible au contact et, lors d'une absence d'interrogation ou de résultats d'interrogation au-delà d'une période déterminée, une interruption du mouvement de déplacement est déclenchée ou initiée par le dispositif de commande (3) et/ou la commande d'entraînement (16).

7. Procédé selon l'une des revendications précédentes, **caractérisé en ce que** la modification des valeurs de consigne (15) pour la commande d'entraînement (16) au cours de l'actionnement du capteur de détection de position (10) sensible au contact à l'intérieur d'une période déterminée est globalement proportionnelle au trajet parcouru pendant cette période sur la surface d'actionnement (13) du capteur de détection de position (10) sensible au contact.

8. Procédé selon l'une des revendications précédentes, **caractérisé en ce que** la modification des valeurs de consigne (15) pour la commande d'entraînement (16) à l'intérieur d'une période déterminée est globalement proportionnelle à la distance, déterminée dans cette période, entre une position d'actionnement actuelle et un point de contact initial commençant le mouvement d'actionnement parcouru sur la surface d'actionnement (13) du capteur de détection de position (10) sensible au contact, dans lequel, en plus de la distance déterminée, le cas échéant également la direction ou l'orientation de la position d'actionnement actuelle par rapport au point de contact initial immédiatement précédent, plus particulièrement par rapport à un axe de coordonnées, est déterminée, et est également déterminante pour la modification des valeurs de consigne (15) pour la commande d'entraînement (16).

9. Procédé selon l'une des revendications précédentes, **caractérisé en ce que** les valeurs de consigne (15) pour la commande d'entraînement (16) sont déterminées et fixées en fonction d'une modification de la position d'actionnement le long d'une direction ou d'une dimension déterminée, plus particulièrement par rapport à un axe de coordonnées déterminé.

10. Procédé selon l'une des revendications précédentes, **caractérisé en ce que** la modification maximale admissible (25) des valeurs de consigne (15) pour la commande d'entraînement (16) est limitée par rapport à une distance temporelle déterminée (26) par une valeur limite supérieure, dans lequel la modification maximale admissible (25) des valeurs de consigne (15) est rendue dépendante de la vitesse de mouvement maximale admissible, de la vitesse de mouvement maximale possible ou de la vitesse de mouvement, pouvant être surveillée et contrôlée en toute sécurité par un opérateur, de l'entraînement contrôlé.

11. Procédé selon la revendication 10, **caractérisé en ce que** la valeur limite supérieure est adaptée de manière variable, dans lequel cette adaptation de la valeur limite supérieure est rendue dépendante de l'état de fonctionnement de la machine (2) ou de l'installation (1) et/ou de la position actuelle de l'entraînement contrôlé ou d'un axe de machine contrôlé.

12. Procédé selon l'une des revendications précédentes, **caractérisé en ce que**, à partir de la directive de mouvement du capteur de détection de position (10) sensible au contact et/ou à partir des valeurs de mesure, mesurées par le capteur, du mouvement ou de la modification de déroulement effectué par la machine (2) ou l'installation (1) et/ou à partir des instructions de commande générées par le dispositif de commande (3) ou par la commande d'entraînement (16), une grandeur caractéristique est déterminée et comparée avec une valeur limite supérieure, et **en ce que**, lors d'un dépassement de la valeur limite supérieure, le mouvement ou la modification de déroulement de la machine (2) ou de l'installation (1) est stoppé immédiatement ou après une phase d'inertie, et/ou **en ce que**, si la grandeur caractéristique s'approche de manière définie de la valeur limite supérieure ou lors d'un dépassement d'une valeur limite inférieure, qui est inférieure à la valeur limite supérieure, la proximité ou l'approche de la valeur limite supérieure est signalée à l'opérateur par l'émission d'un signal d'avertissement.

13. Procédé selon l'une des revendications précédentes, **caractérisé en ce qu'**une zone de proximité (40) est prédéfinie autour d'une position zéro ou de démarrage (39) du capteur de détection de position (10) sensible au contact et une modification des valeurs de consigne (15) pour la commande d'entraînement (16) ou une validation de l'entraînement à contrôler n'a lieu que lorsqu'un organe de saisie, plus particulièrement un doigt de l'opérateur, est déplacé au-delà d'une distance déterminée ou au-delà de la zone de proximité (40) prédéfinie.

14. Procédé selon l'une des revendications précédentes, **caractérisé en ce que**, dans au moins une portion de bord ou d'extrémité du capteur de détection de position (10) sensible au contact, une zone d'extrémité (41, 42) est définie, et **en ce que**, lors d'un mouvement d'actionnement sans interruption, au moyen d'un organe de saisie, plus particulièrement d'un doigt d'un opérateur, à partir d'une zone de mouvement centrale ou interne (36) vers une des zones d'extrémité (41, 42), la modification des valeurs de consigne (15) est continuée, plus particulièrement maintenue constante, à partir du moment d'arrivée dans la zone d'extrémité (41, 42) correspondante, indépendamment de la modification supplémentaire de la position d'actionnement, jusqu'à ce que l'organe de saisie quitte à nouveau la zone d'extrémité (41, 42), plus particulièrement soit soulevé de la zone d'extrémité (41, 42).

15. Procédé selon l'une des revendications 1 à 13, **caractérisé en ce que**, lors d'un actionnement par balayage au moyen d'un organe de saisie, plus particulièrement d'un doigt d'un opérateur et lors d'une modification correspondante des valeurs de consigne (15), la modification supplémentaire des valeurs de consigne (15) est continuée, plus particulièrement maintenue constante, ou plus particulièrement continuée sans changement ou avec une lente diminution, à partir du moment du soulèvement de l'organe de saisie de la surface d'actionnement (13), jusqu'à ce que l'organe de saisie soit à nouveau posé sur la surface d'actionnement (13).

16. Commande de machine avec un panneau de commande (5), qui est conçu au moins pour le contrôle manuel de mouvements d'une machine (2) ou d'une installation (1) contrôlée électroniquement,
avec un moyen de saisie (9, 9') à commande proportionnelle ou quasi-analogique, qui peut être actionné manuellement,
dans laquelle la commande de machine ou une commande d'entraînement (16) incluse dans la commande de machine est conçue pour la génération d'une séquence temporelle de valeurs de consigne quasi-analogiques (15), plus particulièrement de valeurs de position, de valeurs de vitesse ou de valeurs d'accélération pour au moins un entraînement de la machine (2) ou de l'installation (1) contrôlée électroniquement et cette séquence temporelle de valeurs de consigne quasi-analogiques (15) est basée sur les directives ou les saisies d'un opérateur par rapport au moyen de saisie à commande quasi-analogique (9, 9'),
dans laquelle, en tant que moyen de saisie (9), un capteur de détection de position (10) sensible au contact, à résolution au moins unidimensionnelle, plus particulièrement à la manière d'une tablette tactile (11) ou d'un écran tactile (12, 12'), est conçu, qui est prévu pour la détection en continu d'un mouvement d'actionnement par balayage ou d'au moins une position d'actionnement individuelle à l'intérieur d'une surface d'actionnement (13), pouvant être analysée électroniquement, du capteur de détection de position (10) sensible au contact,
et dans laquelle la commande de machine ou la commande d'entraînement (16) détermine, par l'intégration du capteur de détection de position (10) sensible au contact, une séquence temporelle de valeurs de référence ou de position (14) concernant des actionnements par rapport à la surface d'actionnement (13) et est conçue pour la conversion de cette séquence temporelle de valeurs de référence ou de position (14) en une séquence temporelle correspondante de valeurs de consigne (15) pour la commande de machine ou la commande d'entraînement (16),
**caractérisée en ce que**
un masque en forme de plaque (47) et/ou un film (48) est superposé au capteur de détection de position (10) sensible au contact, ce masque comprenant des creux (49) et/ou ce film (48) comprenant des bossages (50) pour faciliter la détermination de la position ou le guidage haptique du doigt d'un opérateur par rapport au capteur de détection de position (10) sensible au contact, dans laquelle
le capteur de position (10) sensible au contact comprend, à l'intérieur de sa surface d'actionnement (13), une première et au moins une seconde portion d'actionnement (43, 44), dans laquelle la seconde portion d'actionnement (44) est conçue pour générer des valeurs de consigne (15) pour la commande d'entraînement (16), qui présentent une résolution plus élevée ou plus fine par rapport aux valeurs de consigne (15) pour la commande d'entraînement (16) pouvant être générées sur la première portion d'actionnement (43) et permettent une commande manuelle plus fine de l'entraînement.

17. Commande de machine selon la revendication 16, **caractérisée en ce que** la première portion d'actionnement (43) et l'au moins une autre portion d'actionnement (44) sont constituées de capteurs de détection de position (10) indépendants.

18. Commande de machine selon l'une des revendications 16 à 17, **caractérisée en ce que** le capteur de détection de position (10) sensible au contact est compatible « Multi-Touch » et est conçu pour la détection simultanée de plusieurs points d'actionnement distants entre eux.

19. Commande de machine selon l'une des revendications 16 à 18, **caractérisée en ce que** le capteur de détection de position (10) sensible au contact comprend une première portion d'actionnement (43) en forme de bande et une seconde portion d'actionnement (44) en forme de bande, dans laquelle la seconde portion d'actionnement (44) en forme de bande forme un angle avec la première portion d'actionnement (43) en forme de bande ou s'étend avec une orientation différente, de façon à ce qu'une surface d'actionnement (13) globalement en forme de V ou de U en vue de dessus, soit formée.

20. Commande de machine selon la revendication 19, **caractérisée en ce que**, dans une portion de liaison ou de transition (45) entre la première portion d'actionnement (43) en forme de bande et la seconde portion d'actionnement (44) en forme de bande, une zone neutre ou de démarrage (46) est formée, qui, lors de son actionnement, est prévue pour immobiliser l'entraînement actif contrôlé de la machine (2) ou de l'installation (1).

21. Commande de machine selon la revendication 20, **caractérisé en ce qu'**une épaisseur (51) du masque en forme de plaque (47) ou une hauteur (52) des bossages (50) du film (48) sont dimensionnées de façon à ce que, du côté du capteur de détection de position (10) sensible au contact, aucune reconnaissance d'un doigt ou d'une partie de la main d'un opérateur appuyé dessus n'a lieu, et **en ce qu'**une profondeur (53) des creux (49) dans le masque en forme de plaque (47) ou une capacité de déformation élastique des bossages (50) du film (48) est dimensionnée de façon à ce que, lors d'un contact ou d'un actionnement avec le doigt d'un opérateur, une reconnaissance par le capteur de détection de position (10) sensible au contact est garantie.
